# EUROPEAN PATENT APPLICATION

(11) **EP 4 365 724 A1**
(43) Date of publication of application: **08.05.2024**
(21) Application number: 22860238.9
(22) Date of filing: 09.08.2022
(51) Int. Cl.: G06F 3/0484, G06F 3/14

(54) **IMAGE PROCESSING METHOD, DISPLAY DEVICE, CONTROL DEVICE, COMBINED SCREEN, AND STORAGE MEDIUM**

(30) Priority: 23.08.2021 CN 202110970722
(71) Applicant: Huawei Technologies Co., Ltd., Longgang Shenzhen, Guangdong 518129 (CN)
(72) Inventor: HU, Shiyao, Shenzhen, Guangdong 518129 (CN); HUANG, Yu, Shenzhen, Guangdong 518129 (CN); LIU, Feng, Shenzhen, Guangdong 518129 (CN); ZHANG, Huaxiang, Shenzhen, Guangdong 518129 (CN)
(74) Representative: Pfenning, Meinig & Partner mbB
(86) International application number: PCT/CN2022/111110
(87) International publication number: WO 2023/024892

(57) **Abstract**

Embodiments of this application relate to the field of image processing technologies, and provide an image processing method, a display device, a control device, a combined screen, and a storage medium, which are used in an image processing system including the control device and the combined screen. The combined screen is formed by splicing a plurality of display devices. The display device obtains a display parameter, where the display parameter includes an enlargement multiple, a location offset, and an angle offset. The enlargement multiple indicates a proportion of enlarging a to-be-displayed image, and the location offset and the angle offset respectively indicate a relative location and a relative rotation angle of the display device relative to the combined screen. The display device determines and displays display content of the display device based on the display parameter and the to-be-displayed image. Each display device in the combined screen may adjust the to-be-displayed image to a same display size based on the display parameter of the display device, and display a corresponding part of the image, thereby reducing or even eliminating a sense of misalignment and a sense of division of a picture when the combined screen displays the entire picture, and improving display effect.

## Description

This application claims priority to Chinese Patent Application No. 202110970722.X, filed with the China National Intellectual Property Administration on August 23, 2021 and entitled "IMAGE PROCESSING METHOD, DISPLAY DEVICE, CONTROL DEVICE, COMBINED SCREEN, AND STORAGE MEDIUM", which is incorporated herein by reference in its entirety.

### TECHNICAL FIELD

Embodiments of this application relate to the field of image processing technologies, and in particular, to an image processing method, a display device, a control device, a combined screen, and a storage medium.

### BACKGROUND

With development of display technologies and diversity of display scenarios, there are increasingly more requirements for large-sized displays. Although the display technologies are progressing, a yield rate of the large-sized display is still low. Currently, a plurality of small-sized displays are usually spliced to form a large-sized combined screen.

However, when the plurality of small-sized displays display an image, the image displayed on the different small-sized displays is misaligned. Consequently, an entire picture displayed on the combined screen has a sense of division, and display effect is poor.

### SUMMARY

Embodiments of this application provide an image processing method, a display device, a control device, a combined screen, and a storage medium, to reduce or even eliminate a sense of misalignment and a sense of division of a picture when the combined screen displays the picture, thereby improving display effect.

According to a first aspect, an image processing method is provided, applied to a display device, where the method includes: obtaining a display parameter, where the display parameter includes an enlargement multiple, a location offset, and an angle offset, the enlargement multiple indicates a proportion of enlarging a to-be-displayed image by the display device, the location offset indicates a relative location of the display device relative to a combined screen, the angle offset indicates a relative rotation angle of the display device relative to the combined screen, and the combined screen includes a plurality of display devices; obtaining the to-be-displayed image; and determining display content of the display device based on the display parameter and the to-be-displayed image, and displaying the display content.

According to the image processing method provided in the first aspect, the display device obtains the display parameter, where the display parameter is determined based on a location and an angle of the display device in the combined screen. Each display device in the combined screen processes the to-be-displayed image based on a display parameter of each display device, so that the to-be-displayed image can be adjusted to a same display size, and each display device separately displays a part of the image. It can be learned that, the displayed image is corrected by using the image processing method, so that a sense of misalignment and a sense of division of a picture are reduced or even eliminated when the combined screen displays the entire picture, and the entire picture displayed by the combined screen is more unified and harmonious, thereby improving display effect of the combined screen.

In a possible implementation, the determining display content of the display device based on the display parameter and the to-be-displayed image includes: separately enlarging, moving, and rotating the to-be-displayed image based on the enlargement multiple, the location offset, and the angle offset, to determine the display content of the display device.

In this implementation, the display device separately enlarges, moves, and rotates the to-be-displayed image based on the display parameter, so that the to-be-displayed image is adjusted to a same display size, thereby reducing or even eliminating a sense of misalignment and a sense of division of a picture when the combined screen displays the entire picture.

In a possible implementation, the separately enlarging, moving, and rotating the to-be-displayed image based on the enlargement multiple, the location offset, and the angle offset, to determine the display content of the display device includes: separately enlarging, moving, and rotating the to-be-displayed image based on the enlargement multiple, the location offset, and the angle offset to obtain a reference image, and determining a partial image that corresponds to the display device and that is in the reference image as the display content of the display device.

In this implementation, the reference image is a corresponding image of a same display size obtained after each display device enlarges, moves, and rotates the to-be-displayed image. Each display device separately displays a part of the reference image, so that a sense of misalignment and a sense of division of a picture are reduced or even eliminated when the combined screen displays the entire picture.

In a possible implementation, the separately enlarging, moving, and rotating the to-be-displayed image based on the enlargement multiple, the location offset, and the angle offset to obtain a reference image includes: enlarging the to-be-displayed image based on the enlargement multiple to obtain a first intermediate image; rotating the first intermediate image based on the angle offset to obtain a second intermediate image; and moving the second intermediate image based on the location offset to obtain the reference image.

In this implementation, the display device sequentially enlarges, rotates, and moves the to-be-displayed image to obtain the reference image.

In a possible implementation, the separately enlarging, moving, and rotating the to-be-displayed image based on the enlargement multiple, the location offset, and the angle offset to obtain a reference image includes: rotating the to-be-displayed image based on the angle offset to obtain a first intermediate image; enlarging the first intermediate image based on the enlargement multiple to obtain a second intermediate image; and moving the second intermediate image based on the location offset to obtain the reference image.

In this implementation, the display device sequentially rotates, enlarges, and moves the to-be-displayed image to obtain the reference image.

In a possible implementation, each display device in the combined screen corresponds to the reference image of a same size.

In a possible implementation, the obtaining a display parameter includes: receiving the display parameter sent by a control device.

In this implementation, the control device determines a display parameter of each display device in the combined screen, and sends the display parameter to the display device, so that each display device does not need to separately calculate the display parameter of the display device, and data processing efficiency of the image processing system is improved.

In a possible implementation, the obtaining the to-be-displayed image includes: receiving the to-be-displayed image sent by a control device.

In a possible implementation, the obtaining a display parameter includes: obtaining first data, where the first data represents a location and an angle of the display device in the combined screen; and determining the display parameter based on the first data.

In this implementation, the display device determines the display parameter of the display device, so that the display parameter can be more accurately determined based on an actual application scenario.

In a possible implementation, the determining the display parameter based on the first data includes: determining, based on the first data, a first reference region of the combined screen, a second reference region of the display device, a first reference point in the first reference region, and a second reference point in the second reference region, where both the first reference region and the second reference region are rectangular; and determining the enlargement multiple based on a size of the first reference region and a size of the second reference region, determining the location offset based on a location of the first reference point and a location of the second reference point, and determining the angle offset based on the first reference region and the second reference region.

In a possible implementation, the determining the enlargement multiple based on a size of the first reference region and a size of the second reference region includes: obtaining a picture adjustment policy, where the picture adjustment policy indicates a manner of filling the first reference region with the reference image; and determining the enlargement multiple based on the picture adjustment policy, the size of the first reference region, and the size of the second reference region.

In a possible implementation, the picture adjustment policy includes at least one of the following: a tile mode, a length alignment mode, a width alignment mode, and an adaptive mode, where in the tile mode, the reference image fills the first reference region in both a length direction and a width direction; in the length alignment mode, the reference image fills the first reference region in the length direction; in the width alignment mode, the reference image fills the first reference region in the width direction; and in the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the length alignment mode, or the width alignment mode.

In a possible implementation, the determining the enlargement multiple based on the picture adjustment policy, the size of the first reference region, and the size of the second reference region includes: if the picture adjustment policy is the tile mode, determining a first enlargement multiple in the length direction based on a length of the first reference region and a length of the second reference region, determining a second enlargement multiple in the width direction based on a width of the first reference region and a width of the second reference region, and determining the first enlargement multiple and the second enlargement multiple as the enlargement multiple; if the picture adjustment policy is the length alignment mode, determining a first enlargement multiple in the length direction based on a length of the first reference region and a length of the second reference region, and determining the first enlargement multiple as the enlargement multiple; or if the picture adjustment policy is the width alignment mode, determining a second enlargement multiple in the width direction based on a width of the first reference region and a width of the second reference region, and determining the second enlargement multiple as the enlargement multiple.

In a possible implementation, the determining the location offset based on a location of the first reference point and a location of the second reference point includes: obtaining a picture display policy, where the picture display policy indicates a display location of the reference image in the first reference region; and determining the location offset based on the picture display policy, the location of the first reference point, and the location of the second reference point.

In a possible implementation, before the determining the location offset based on a location of the first reference point and a location of the second reference point, the method further includes: establishing a reference coordinate system based on the first reference region; and obtaining coordinates of the first reference point and the second reference point in the reference coordinate system.

In a possible implementation, the determining the angle offset based on the first reference region and the second reference region includes: determining an included angle between a length direction of the first reference region and a length direction of the second reference region as the angle offset; or determining an included angle between a width direction of the first reference region and a width direction of the second reference region as the angle offset.

In a possible implementation, the first reference region is a minimum bounding rectangle or a maximum inscribed rectangle of the combined screen.

In a possible implementation, the first reference region is a minimum bounding rectangle or a maximum inscribed rectangle of an effective region of the combined screen, and the effective region of the combined screen is a region obtained after a frame of each display device is removed from the combined screen.

In a possible implementation, the second reference region is a minimum bounding rectangle or a maximum inscribed rectangle of the display device.

In a possible implementation, the second reference region is a minimum bounding rectangle or a maximum inscribed rectangle of an effective region of the display device, and the effective region of the display device is a region obtained after the frame of the display device is removed.

In a possible implementation, the first data includes location information of each display device in the combined screen.

In a possible implementation, the first data includes a target image, and the target image is an image obtained by photographing the combined screen when each display device in the combined screen displays a pure-color image.

According to a second aspect, an image processing method is provided, applied to a control device, where the method includes: obtaining first data, where the first data represents a location and an angle of each display device in a combined screen, and the combined screen includes a plurality of display devices; determining a display parameter of each display device based on the first data, where the display parameter includes an enlargement multiple, a location offset, and an angle offset, the enlargement multiple indicates a proportion of enlarging a to-be-displayed image by the display device, the location offset indicates a relative location of the display device relative to the combined screen, and the angle offset indicates a relative rotation angle of the display device relative to the combined screen; and sending the corresponding display parameter to each display device.

According to the image processing method provided in the second aspect, the control device may determine the display parameter of each display device in the combined screen, and send the display parameter to the display device. Because the display parameter is determined based on the location and the angle of the display device in the combined screen, each display device in the combined screen processes the to-be-displayed image based on the display parameter, so that the to-be-displayed image may be adjusted to a same display size, and each display device displays a part of the image. In this way, a sense of misalignment and a sense of division of a picture when the combined screen displays the entire picture are reduced and even eliminated, and the entire picture displayed by the combined screen is more unified and harmonious, thereby improving display effect of the combined screen.

In a possible implementation, the determining a display parameter of each display device based on the first data includes: determining, based on the first data, a first reference region of the combined screen, a second reference region of each display device, a first reference point in the first reference region, and a second reference point in each second reference region, where both the first reference region and the second reference region are rectangular; and for each display device, determining the enlargement multiple of the display device based on a size of the first reference region and a size of the second reference region of the display device, determining the location offset of the display device based on a location of the first reference point and a location of the second reference point of the display device, and determining the angle offset of the display device based on the first reference region and the second reference region of the display device.

In a possible implementation, the determining the enlargement multiple of the display device based on a size of the first reference region and a size of the second reference region of the display device includes: obtaining a picture adjustment policy, where the picture adjustment policy indicates a manner of filling the first reference region with the to-be-displayed image; and determining the enlargement multiple based on the picture adjustment policy, the size of the first reference region, and the size of the second reference region.

In a possible implementation, the picture adjustment policy includes at least one of the following: a tile mode, a length alignment mode, a width alignment mode, and an adaptive mode, where in the tile mode, the to-be-displayed image fills the first reference region in both a length direction and a width direction; in the length alignment mode, the to-be-displayed image fills the first reference region in the length direction; in the width alignment mode, the to-be-displayed image fills the first reference region in the width direction; and in the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the width alignment mode, or the width alignment mode.

In a possible implementation, the determining the enlargement multiple based on the picture adjustment policy, the size of the first reference region, and the size of the second reference region includes: if the picture adjustment policy is the tile mode, determining a first enlargement multiple in the length direction based on a length of the first reference region and a length of the second reference region, determining a second enlargement multiple in the width direction based on a width of the first reference region and a width of the second reference region, and determining the first enlargement multiple and the second enlargement multiple as the enlargement multiple; if the picture adjustment policy is the length alignment mode, determining a first enlargement multiple in the length direction based on a length of the first reference region and a length of the second reference region, and determining the first enlargement multiple as the enlargement multiple; or if the picture adjustment policy is the width alignment mode, determining a second enlargement multiple in the width direction based on a width of the first reference region and a width of the second reference region, and determining the second enlargement multiple as the enlargement multiple.

In a possible implementation, the determining the location offset of the display device based on a location of the first reference point and a location of the second reference point of the display device includes: obtaining a picture display policy, where the picture display policy indicates a display location of the to-be-displayed image in the first reference region; and determining the location offset based on the picture display policy, the location of the first reference point, and the location of the second reference point.

In a possible implementation, before the determining the location offset based on a location of the first reference point and a location of the second reference point, the method further includes: establishing a reference coordinate system based on the first reference region; and obtaining coordinates of the first reference point and the second reference point in the reference coordinate system.

In a possible implementation, the determining the angle offset of the display device based on the first reference region and the second reference region of the display device includes:
determining an included angle between a length direction of the first reference region and a length direction of the second reference region as the angle offset; or determining an included angle between a width direction of the first reference region and a width direction of the second reference region as the angle offset.

In a possible implementation, the first reference region is a minimum bounding rectangle or a maximum inscribed rectangle of the combined screen.

In a possible implementation, the first reference region is a minimum bounding rectangle or a maximum inscribed rectangle of an effective region of the combined screen, and the effective region of the combined screen is a region obtained after a frame of each display device is removed from the combined screen.

In a possible implementation, the second reference region of the display device is a minimum bounding rectangle or a maximum inscribed rectangle of the display device.

In a possible implementation, the second reference region of the display device is a minimum bounding rectangle or a maximum inscribed rectangle of an effective region of the display device, and the effective region of the display device is a region obtained after the frame of the display device is removed.

In a possible implementation, the first data includes location information of each display device in the combined screen.

In a possible implementation, the first data includes a target image, and the target image is an image obtained by photographing the combined screen when each display device in the combined screen displays a pure-color image.

According to a third aspect, an image processing apparatus is provided, including: a first obtaining module, configured to obtain a display parameter, where the display parameter includes an enlargement multiple, a location offset, and an angle offset, the enlargement multiple indicates a proportion of enlarging a to-be-displayed image by the display device, the location offset indicates a relative location of the display device relative to a combined screen, and the angle offset indicates a relative rotation angle of the display device relative to the combined screen, and the combined screen includes a plurality of display devices; a second obtaining module, configured to obtain the to-be-displayed image; a processing module, configured to determine display content of the display device based on the display parameter and the to-be-displayed image; and a display module, configured to display the display content.

In a possible implementation, the processing module is configured to: separately enlarge, move, and rotate the to-be-displayed image based on the enlargement multiple, the location offset, and the angle offset, to determine display content of the display device.

In a possible implementation, the processing module is configured to: separately enlarge, move, and rotate the to-be-displayed image based on the enlargement multiple, the location offset, and the angle offset to obtain a reference image, and determine a partial image that corresponds to the display device and that is in the reference image as the display content of the display device.

In a possible implementation, the processing module is configured to: enlarge the to-be-displayed image based on the enlargement multiple to obtain a first intermediate image; rotate the first intermediate image based on the angle offset to obtain a second intermediate image; and move the second intermediate image based on the location offset to obtain the reference image.

In a possible implementation, each display device in the combined screen corresponds to the reference image of a same size.

In a possible implementation, the first obtaining module is configured to receive the display parameter sent by a control device.

In a possible implementation, the second obtaining module is configured to receive the to-be-displayed image sent by the control device.

In a possible implementation, the first obtaining module is configured to: obtain first data, where the first data represents a location and an angle of the display device in the combined screen; and determine the display parameter based on the first data.

In a possible implementation, the first obtaining module is configured to: determine, based on the first data, a first reference region of the combined screen, a second reference region of the display device, a first reference point in the first reference region, and a second reference point in the second reference region, where both the first reference region and the second reference region are rectangular; and determine the enlargement multiple based on a size of the first reference region and a size of the second reference region, determine the location offset based on a location of the first reference point and a location of the second reference point, and determine the angle offset based on the first reference region and the second reference region.

In a possible implementation, the first obtaining module is configured to: obtain a picture adjustment policy, where the picture adjustment policy indicates a manner of filling the first reference region with the reference image; and determine the enlargement multiple based on the picture adjustment policy, the size of the first reference region, and the size of the second reference region.

In a possible implementation, the picture adjustment policy includes at least one of the following: a tile mode, a length alignment mode, a width alignment mode, and an adaptive mode, where in the tile mode, the reference image fills the first reference region in both a length direction and a width direction; in the length alignment mode, the reference image fills the first reference region in the length direction; in the width alignment mode, the reference image fills the first reference region in the width direction; and in the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the width alignment mode, or the width alignment mode.

In a possible implementation, the first obtaining module is configured to: if the picture adjustment policy is the tile mode, determine a first enlargement multiple in the length direction based on a length of the first reference region and a length of the second reference region, determine a second enlargement multiple in the width direction based on a width of the first reference region and a width of the second reference region, and determine the first enlargement multiple and the second enlargement multiple as the enlargement multiple; if the picture adjustment policy is the length alignment mode, determine a first enlargement multiple in the length direction based on a length of the first reference region and a length of the second reference region, and determine the first enlargement multiple as the enlargement multiple; or if the picture adjustment policy is the width alignment mode, determine a second enlargement multiple in the width direction based on a width of the first reference region and a width of the second reference region, and determine the second enlargement multiple as the enlargement multiple.

In a possible implementation, the first obtaining module is configured to: obtain a picture display policy, where the picture display policy indicates a display location of the reference image in the first reference region; and determine the location offset based on the picture display policy, the location of the first reference point, and the location of the second reference point.

In a possible implementation, the first obtaining module is further configured to: establish a reference coordinate system based on the first reference region before the location offset is determined based on the location of the first reference point and the location of the second reference point; and obtain coordinates of the first reference point and the second reference point in the reference coordinate system.

In a possible implementation, the first obtaining module is configured to: determine an included angle between a length direction of the first reference region and a length direction of the second reference region as the angle offset; or determine an included angle between a width direction of the first reference region and a width direction of the second reference region as the angle offset.

In a possible implementation, the first reference region is a minimum bounding rectangle or a maximum inscribed rectangle of the combined screen.

In a possible implementation, the first reference region is a minimum bounding rectangle or a maximum inscribed rectangle of an effective region of the combined screen, and the effective region of the combined screen is a region obtained after a frame of each display device is removed from the combined screen.

In a possible implementation, the second reference region is a minimum bounding rectangle or a maximum inscribed rectangle of the display device.

In a possible implementation, the second reference region is a minimum bounding rectangle or a maximum inscribed rectangle of an effective region of the display device, and the effective region of the display device is a region obtained after the frame of the display device is removed.

In a possible implementation, the first data includes location information of each display device in the combined screen.

In a possible implementation, the first data includes a target image, and the target image is an image obtained by photographing the combined screen when each display device in the combined screen displays a pure-color image.

According to a fourth aspect, an image processing apparatus is provided, including: an obtaining module, configured to obtain first data, where the first data represents a location and an angle of each display device in a combined screen, and the combined screen includes a plurality of display devices; a processing module, configured to determine a display parameter of each display device based on the first data, where the display parameter includes an enlargement multiple, a location offset, and an angle offset, the enlargement multiple indicates a proportion of enlarging a to-be-displayed image by the display device, the location offset indicates a relative location of the display device relative to the combined screen, and the angle offset indicates a relative rotation angle of the display device relative to the combined screen; and a sending module, configured to send the corresponding display parameter to each display device.

In a possible implementation, the processing module is configured to: determine, based on the first data, a first reference region of the combined screen, a second reference region of each display device, a first reference point in the first reference region, and a second reference point in each second reference region, where both the first reference region and the second reference region are rectangular; and for each display device, determine the enlargement multiple of the display device based on a size of the first reference region and a size of the second reference region of the display device, determine the location offset of the display device based on a location of the first reference point and a location of the second reference point of the display device, and determine the angle offset of the display device based on the first reference region and the second reference region of the display device.

In a possible implementation, the processing module is configured to: obtain a picture adjustment policy, where the picture adjustment policy indicates a manner of filling the first reference region with the to-be-displayed image; and determine the enlargement multiple based on the picture adjustment policy, the size of the first reference region, and the size of the second reference region.

In a possible implementation, the picture adjustment policy includes at least one of the following: a tile mode, a length alignment mode, a width alignment mode, and an adaptive mode, where in the tile mode, the to-be-displayed image fills the first reference region in both a length direction and a width direction; in the length alignment mode, the to-be-displayed image fills the first reference region in the length direction; in the width alignment mode, the to-be-displayed image fills the first reference region in the width direction; and in the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the width alignment mode, or the width alignment mode.

In a possible implementation, the processing module is configured to: if the picture adjustment policy is the tile mode, determine a first enlargement multiple in the length direction based on a length of the first reference region and a length of the second reference region, determine a second enlargement multiple in the width direction based on a width of the first reference region and a width of the second reference region, and determine the first enlargement multiple and the second enlargement multiple as the enlargement multiple; if the picture adjustment policy is the length alignment mode, determine a first enlargement multiple in the length direction based on a length of the first reference region and a length of the second reference region, and determine the first enlargement multiple as the enlargement multiple; or if the picture adjustment policy is the width alignment mode, determine a second enlargement multiple in the width direction based on a width of the first reference region and a width of the second reference region, and determine the second enlargement multiple as the enlargement multiple.

In a possible implementation, the processing module is configured to: obtain a picture display policy, where the picture display policy indicates a display location of the to-be-displayed image in the first reference region; and determine the location offset based on the picture display policy, the location of the first reference point, and the location of the second reference point.

In a possible implementation, the processing module is further configured to: establish a reference coordinate system based on the first reference region before the location offset is determined based on the location of the first reference point and the location of the second reference point; and obtain coordinates of the first reference point and the second reference point in the reference coordinate system.

In a possible implementation, the processing module is configured to: determine an included angle between a length direction of the first reference region and a length direction of the second reference region as the angle offset; or determine an included angle between a width direction of the first reference region and a width direction of the second reference region as the angle offset.

In a possible implementation, the first reference region is a minimum bounding rectangle or a maximum inscribed rectangle of the combined screen.

In a possible implementation, the first reference region is a minimum bounding rectangle or a maximum inscribed rectangle of an effective region of the combined screen, and the effective region of the combined screen is a region obtained after a frame of each display device is removed from the combined screen.

In a possible implementation, the second reference region of the display device is a minimum bounding rectangle or a maximum inscribed rectangle of the display device.

In a possible implementation, the second reference region of the display device is a minimum bounding rectangle or a maximum inscribed rectangle of an effective region of the display device, and the effective region of the display device is a region obtained after the frame of the display device is removed.

In a possible implementation, the first data includes location information of each display device in the combined screen.

In a possible implementation, the first data includes a target image, and the target image is an image obtained by photographing the combined screen when each display device in the combined screen displays a pure-color image.

According to a fifth aspect, a display device is provided, including a processor, where the processor is configured to: be coupled to a memory, read instructions in the memory, and enable, based on the instructions, the display device to perform the method provided in the first aspect.

According to a sixth aspect, a control device is provided, including a processor, where the processor is configured to: be coupled to a memory, read instructions in the memory, and enable, based on the instructions, the control device to perform the method provided in the second aspect.

According to a seventh aspect, a combined screen is provided, including a plurality of display devices provided in the fifth aspect.

According to an eighth aspect, an image processing system is provided, including the control device provided in the sixth aspect and the combined screen provided in the seventh aspect.

According to a ninth aspect, a chip system is provided. The chip system includes a processor, the processor is coupled to a memory, and the processor executes a computer program stored in the memory, to implement the method provided in the first aspect or the second aspect.

According to a tenth aspect, a program is provided. When being executed by a processor, the program is used to perform the method provided in the first aspect or the second aspect.

According to an eleventh aspect, a computer-readable storage medium is provided, where the computer-readable storage medium stores instructions, and when the instructions are run on a computer or a processor, the method provided in the first aspect or the second aspect is implemented.

According to a twelfth aspect, a program product is provided, where the program product includes a computer program, the computer program is stored in a readable storage medium, at least one processor of a device may read the computer program from the readable storage medium, and the at least one processor executes the computer program, so that the device implements the method provided in the first aspect or the second aspect.

### BRIEF DESCRIPTION OF DRAWINGS

FIG. 1 is a diagram of an architecture of an image processing system to which an embodiment of this application is applicable;
FIG. 2A to FIG. 2F are a group of schematic diagrams of a combined screen according to an embodiment of this application;
FIG. 3 is a schematic display diagram when a display device in a combined screen has a frame according to an embodiment of this application;
FIG. 4 is a schematic display diagram when display devices in a combined screen are misaligned according to an embodiment of this application;
FIG. 5 is a schematic display diagram when a display device in a combined screen has an angle deflection according to an embodiment of this application;
FIG. 6 is a schematic diagram of a display principle of an image processing method according to an embodiment of this application;
FIG. 7 is a schematic diagram of a reference region and a reference image according to an embodiment of this application;
FIG. 8 is another schematic diagram of a reference region and a reference image according to an embodiment of this application;
FIG. 9 is still another schematic diagram of a reference region and a reference image according to an embodiment of this application;
FIG. 10 is still another schematic diagram of a reference region and a reference image according to an embodiment of this application;
FIG. 11 is a schematic diagram of a reference coordinate system according to an embodiment of this application;
FIG. 12 is a schematic diagram of a second reference point according to an embodiment of this application;
FIG. 13A is a flowchart of an image processing method according to an embodiment of this application;
FIG. 13B is another flowchart of an image processing method according to an embodiment of this application;
FIG. 14(a) to FIG. 14(e) are schematic diagrams of enlarging, moving, and rotating a to-be-displayed image according to an embodiment of this application;
FIG. 15(a) to FIG. 15(e) are some other schematic diagrams of enlarging, moving, and rotating a to-be-displayed image according to an embodiment of this application;
FIG. 16(a) to FIG. 16(e) are still some other schematic diagrams of enlarging, moving, and rotating a to-be-displayed image according to an embodiment of this application;
FIG. 17 is a schematic diagram of a structure of an image processing apparatus according to an embodiment of this application;
FIG. 18 is another schematic diagram of a structure of an image processing apparatus according to an embodiment of this application; and
FIG. 19 is a schematic diagram of a structure of a device according to an embodiment of this application.

### DESCRIPTION OF EMBODIMENTS

The following describes embodiments of this application with reference to accompanying drawings.

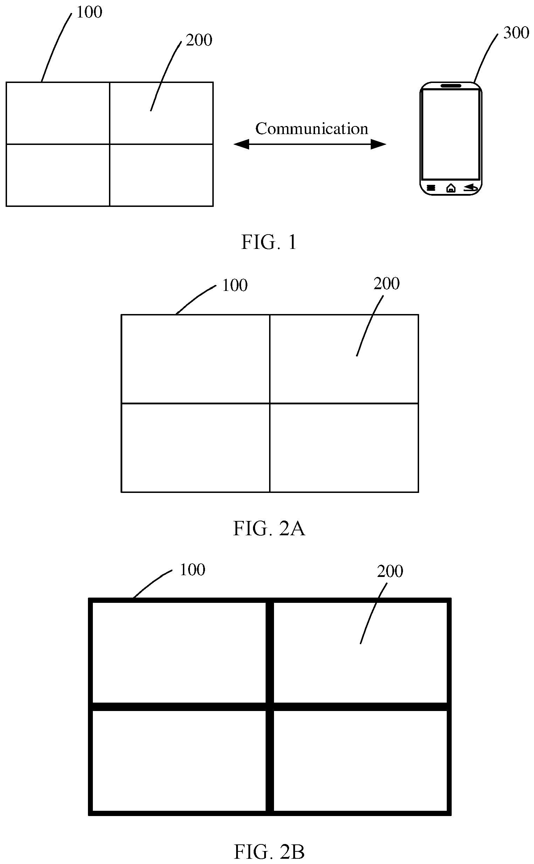

For example, FIG. 1 is a diagram of an architecture of an image processing system to which an embodiment of this application is applicable. As shown in FIG. 1, the image processing system includes a combined screen 100 and a control device 300. The combined screen 100 is formed by splicing and assembling a plurality of display devices 200. A quantity, shapes, a splicing manner, and locations of the display devices 200 in the combined screen 100 are not limited in embodiments of this application. The display device 200 and the control device 300 may communicate with each other, and the communication includes wired communication and/or wireless communication. Content of the communication between the display device 200 and the control device 300 is not limited in embodiments of this application. Optionally, an application (application, app) related to the display device 200 or the combined screen 100 may be installed on the control device 300. A name of the app is not limited in embodiments of this application.

Optionally, the display device 200 may have a frame, or may have no frame. A size of the frame is not limited in embodiments of this application. Optionally, the plurality of display devices 200 included in the combined screen 100 may each have a frame, or some of the display devices 200 each have a frame, or none of the display devices 200 has a frame. Optionally, if there are a plurality of display devices 200 each having a frame, the frames of the plurality of display devices 200 may have a same size or different sizes.

A name and a type of the control device are not limited in embodiments of this application. Some examples of the control device are a mobile phone, a tablet computer, a wearable device, and the like.

With reference to FIG. 2A to FIG. 2F, the following describes implementations of the display device and the combined screen by using examples, but FIG. 2A to FIG. 2F do not constitute a limitation.

For example, in an implementation, as shown in FIG. 2A, the combined screen 100 includes four display devices 200 in total in two rows and two columns, and both the display devices 200 and the combined screen 100 are rectangular. The four display devices 200 have a same specification, and none of the four display devices 200 has a frame.

For example, in another implementation, as shown in FIG. 2B, the combined screen 100 includes four display devices 200 in total in two rows and two columns. A difference from that in FIG. 2A lies in the following: In FIG. 2B, the display device 200 has a frame.

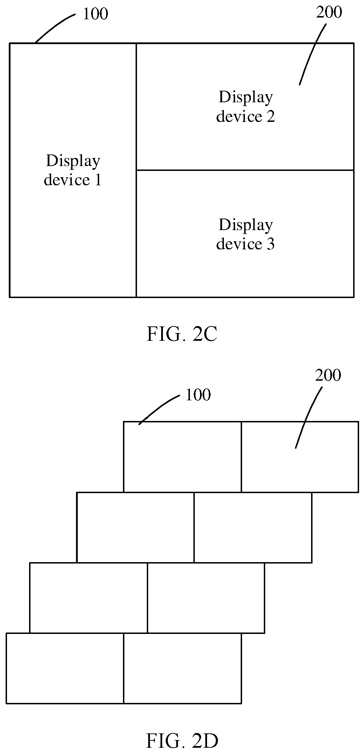

For example, in still another implementation, as shown in FIG. 2C, the combined screen 100 includes three display devices 200. A display device 2 and a display device 3 have a same specification. Both the display device 200 and the combined screen 100 are rectangular.

For example, in still another implementation, as shown in FIG. 2D, the combined screen 100 includes eight display devices 200 in total in four rows, and each row includes two display devices 200. The eight display devices 200 have a same specification, and are all rectangular. The combined screen 100 has an irregular shape, and may be referred to as an abnormal-shaped screen.

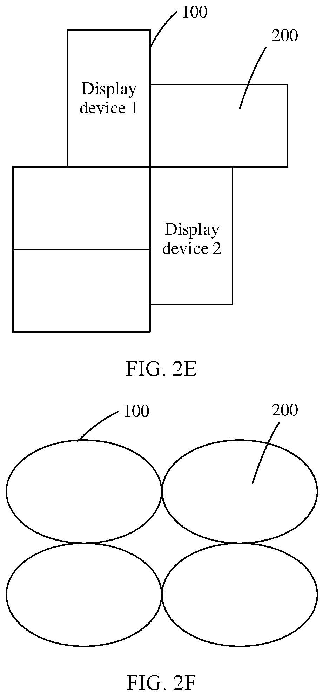

For example, in still another implementation, as shown in FIG. 2E, the combined screen 100 includes five display devices 200 of a same specification. Length and width combination manners of the display device 1 and the display device 2 are different from those of other display devices. The display device 200 is rectangular, and the combined screen 100 is an abnormal-shaped screen.

For example, in still another implementation, as shown in FIG. 2F, the combined screen 100 includes four display devices 200 in total in two rows and two columns. The four display devices 200 have a same specification, and are all elliptical. The combined screen 100 is an abnormal-shaped screen.

Currently, for a combined screen formed by splicing a plurality of display devices, the display device generally divides a to-be-displayed image in a simple manner based on an installation location. In this way, due to some disadvantages, image parts displayed on different display devices are misaligned, so that an entire picture displayed on the combined screen has a sense of division, and display effect is poor. The disadvantage includes but is not limited to at least one of the following: a display device has a frame, different display devices are misaligned, or a display device has an angle deflection.

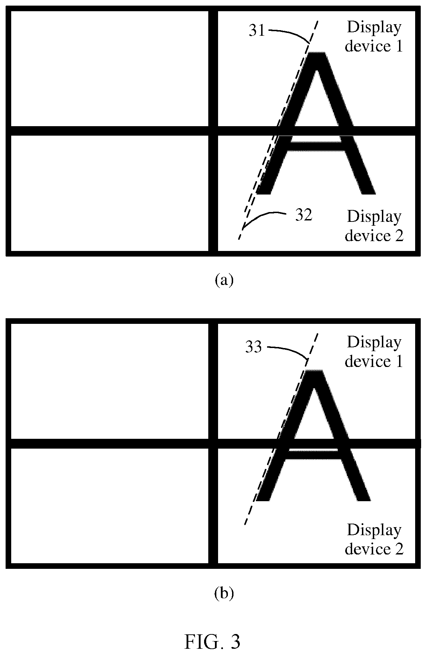

With reference to FIG. 3 to FIG. 5, the following describes an example of a problem of misalignment of a picture displayed on a combined screen, but FIG. 3 to FIG. 5 do not constitute a limitation. In FIG. 3 to FIG. 5, the combined screen includes four display devices of a same specification in total in two rows and two columns.

For example, in an implementation, FIG. 3 shows a scenario in which a display device has a frame. As shown in (a) in FIG. 3, each display device has a frame. Because the display devices divide a to-be-displayed image in a simple manner, the to-be-displayed image is divided into four parts, and each display device separately displays one of the four parts. A display device 1 and a display device 2 each display a part of a letter A. However, it is not considered that the frame of the display device may cause a sense of division on a pattern in the image, and consequently, the entire letter A displayed on the combined screen is misaligned. To reflect misalignment effect, as shown in (a) in FIG. 3, a reference line 31 and a reference line 32 are not on a straight line. When a user sees the letter A displayed on the combined screen, a division line seems to be inserted into the middle of the letter A. A width of the division line is a sum of a width of a lower frame of the display device 1 and a width of an upper frame of the display device 2. Consequently, upper and lower parts of the letter A have a strong sense of misalignment and division in a vertical direction.

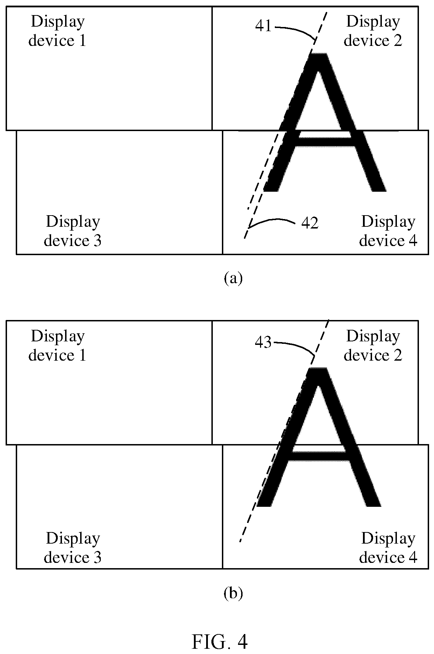

For example, in another implementation, FIG. 4 shows a scenario in which display devices are misaligned. As shown in (a) in FIG. 4, each display device has no frame. A display device 1 and a display device 2 in the first row are left relative to a display device 3 and a display device 4 in the second row, and consequently, a location deviation exists. The display devices are not strictly placed in a side length alignment manner. A to-be-displayed image is divided into four parts in a simple manner, and each display device separately displays one of the four parts. The display device 2 and the display device 4 each display a part of a letter A. However, it is not considered that the location deviation of the display devices may cause a sense of division on a pattern in the image, and consequently, the entire letter A displayed on the combined screen is misaligned. To reflect misalignment effect, as shown in (a) in FIG. 4, a reference line 41 and a reference line 42 are not on a straight line. When a user sees the letter A displayed on the combined screen, an upper half part of the letter A is left relative to a lower half part of the letter A, and consequently, the upper and lower parts of the letter A have a strong sense of misalignment and division in a horizontal direction.

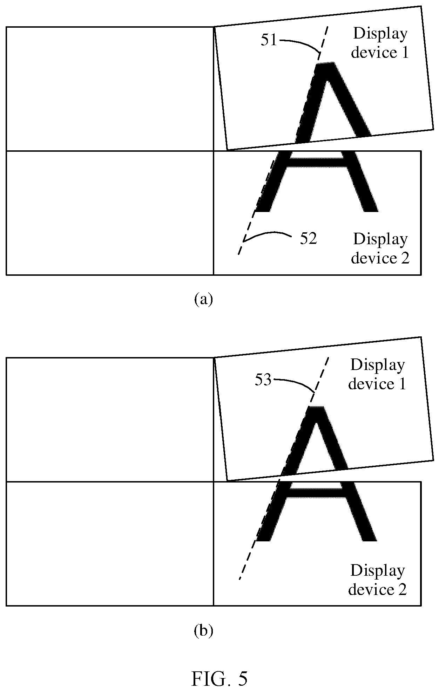

For example, in still another implementation, FIG. 5 shows a scenario in which a display device has an angle deflection. As shown in (a) in FIG. 5, each display device has no frame. A display device 1 has an angle deflection relative to another display device. The display devices are not strictly placed in a manner in which sides are parallel to each other. A to-be-displayed image is divided into four parts in a simple manner, and each display device separately displays one of the four parts. The display device 1 and a display device 2 each display a part of a letter A. However, it is not considered that an angular deviation of the display devices may cause rotation of a pattern in the image, and consequently, the entire letter A displayed on the combined screen is misaligned. To reflect misalignment effect, as shown in (a) in FIG. 5, a reference line 51 and a reference line 52 are not on a straight line. When a user sees the letter A displayed on the combined screen, an upper half part displayed on the display device 1 has strong angle rotation, and upper and lower parts of the letter A are at different angles. Consequently, an entire picture has a sense of misalignment and a sense of division.

An embodiment of this application provides an image processing method. A display device obtains a display parameter, where the display parameter is determined based on a location and an angle of the display device in a combined screen. Each display device in the combined screen processes a to-be-displayed image based on a display parameter of the display device, so that the to-be-displayed image can be adjusted to a same display size, thereby reducing or even eliminating a sense of misalignment and a sense of division of a picture when the combined screen displays the entire picture. The image processing method provided in this embodiment of this application is applicable to display devices and combined screens of various types and shapes. A displayed image is corrected by using the image processing method, so that image correction has high precision and is easy to implement. The entire picture displayed on the combined screen is more unified and harmonious, thereby improving display effect of the combined screen.

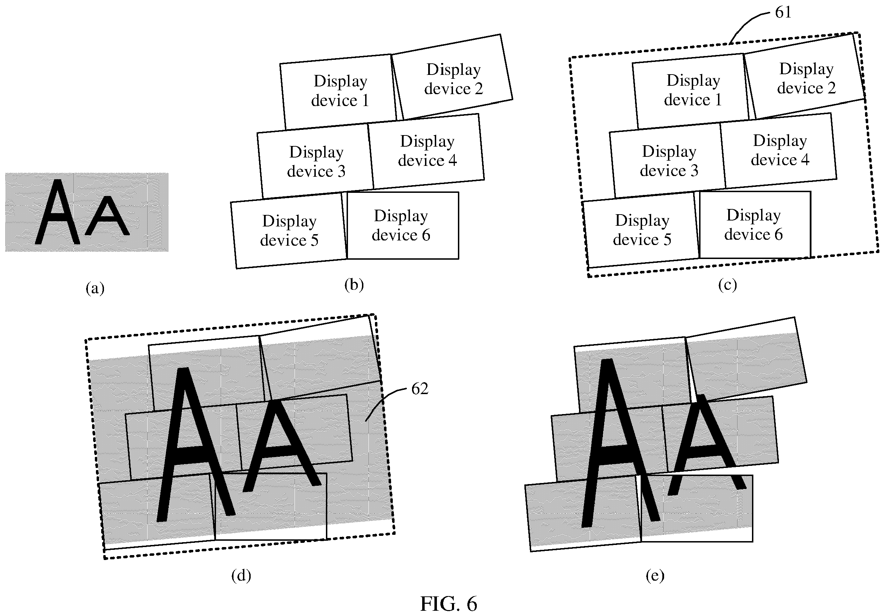

For example, FIG. 6 is a schematic diagram of a display principle of an image processing method according to an embodiment of this application, where (a) in FIG. 6 is a to-be-displayed image, and (b) in FIG. 6 is a combined screen. The combined screen includes six display devices in total: a display device 1 to a display device 6. As shown in (c) in FIG. 6, a region 61 is a reference region determined based on the combined screen. A display parameter of each display device may be determined based on the region 61 and a location and an angle of each display device in the combined screen, so that each display device corrects the to-be-displayed image based on the display parameter of each display device, and the to-be-displayed image may be adjusted to a uniform size. Refer to a reference image 62 in (d) in FIG. 6. Because each display device corresponds to the reference image 62 of a same size, when the combined screen displays an entire picture, a problem of image misalignment between different display devices is reduced or even eliminated, and the entire picture is more harmonious. For display effect of the combined screen, refer to (e) in FIG. 6.

The following uses FIG. 3 to FIG. 5 as examples to describe image display effect of the image processing method provided in embodiments of this application.

For example, as shown in (b) in FIG. 3, the display device 1 and the display device 2 separately display a part of the letter A. It can be seen from a reference line 33 that a boundary line of the letter A is almost on a straight line. Compared with (a) in FIG. 3, in (b) in FIG. 3, when the user sees the letter A displayed on the combined screen, a sense of misalignment and a sense of division are reduced in a vertical direction, and image display effect and viewing experience of the user are improved.

For example, as shown in (b) in FIG. 4, the display device 2 and the display device 4 separately display a part of the letter A. Although the display device 2 is left in a horizontal direction relative to the display device 4, it can be seen from a reference line 43 that the boundary line of the letter A is almost on a straight line. Compared with (a) in FIG. 4, in (b) in FIG. 4, when the user sees the letter A displayed on the combined screen, a sense of misalignment and a sense of division are reduced in the horizontal direction, and image display effect and viewing experience of the user are improved.

For example, as shown in (b) in FIG. 5, the display device 1 and the display device 2 separately display a part of the letter A. Although the display device 1 has an angle deflection relative to another display device, it can be seen from a reference line 53 that the boundary line of the letter A is almost on a straight line. Compared with (a) in FIG. 5, in (b) in FIG. 5, when the user sees the letter A displayed on the combined screen, a sense of misalignment and a sense of division caused by the angle deflection of the display device 1 are reduced, and image display effect and viewing experience of the user are improved.

The following describes concepts related to embodiments of this application.

### 1. Size

A combined screen, a display device, and a to-be-displayed image each have a size.

The size of the combined screen includes a length and a width of a first reference region corresponding to the combined screen.

The size of the display device includes a length and a width of a second reference region corresponding to the display device.

The size of the to-be-displayed image includes a length and a width of the to-be-displayed image.

A unit of the size is not limited in embodiments of this application, for example, is centimeter, millimeter, inch, or inch.

### 2. Pixel

Pixels include an image pixel and a screen pixel.

The image pixel is a minimum unit or element that cannot be further divided in an image, and each pixel has a color value.

The screen pixel is a minimum unit or element of a display divided horizontally and vertically.

### 3. First reference region and second reference region

A reference region determined based on a shape of the combined screen is referred to as a first reference region, and a reference region determined based on a shape of the display device is referred to as a second reference region. Both the first reference region and the second reference region are rectangular, and are used to determine a display parameter of the display device.

For the first reference region, optionally, in an implementation, the first reference region is a minimum bounding rectangle of the combined screen. An area of the first reference region is greater than or equal to an area of the combined screen. If the area of the first reference region is greater than the area of the combined screen, when the combined screen displays a to-be-displayed image, an edge location of the to-be-displayed image may be cropped out.

Optionally, in another implementation, the first reference region is a maximum inscribed rectangle of the combined screen. An area of the first reference region is less than or equal to an area of the combined screen. If the area of the first reference region is less than the area of the combined screen, when the combined screen displays a to-be-displayed image, a display device located at an edge location of the combined screen may have a partial display blank region, that is, no to-be-displayed image is displayed in a partial region of the display device.

Optionally, the first reference region may be determined based on an effective shape of the combined screen, and the effective shape is a shape of the combined screen obtained after a frame of a display is removed.

Similar to the first reference region, the second reference region may be a minimum bounding rectangle or a maximum inscribed rectangle of the display device, or may be determined based on an effective shape of the display device.

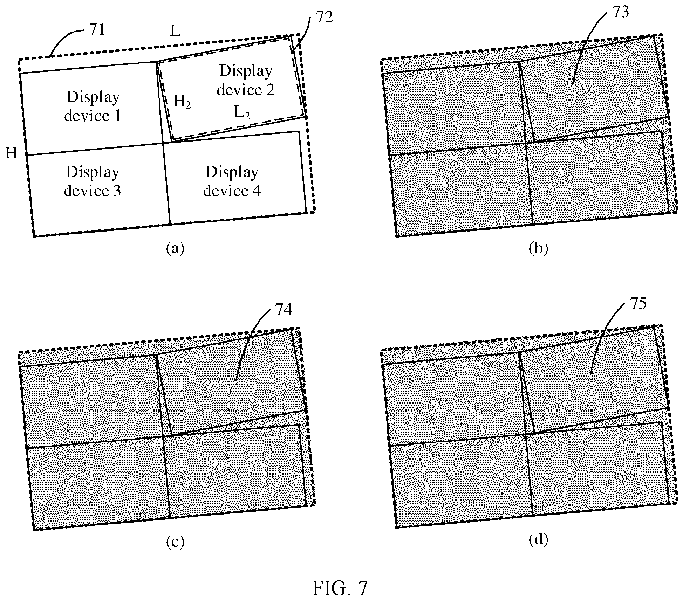

The following provides descriptions by using examples with reference to FIG. 7 to FIG. 10, but FIG. 7 to FIG. 10 do not constitute a limitation.

For example, in an implementation, as shown in (a) in FIG. 7, the combined screen includes a display device 1 to a display device 4, and the display device has no frame. A first reference region 71 is a minimum bounding rectangle of the combined screen, and a size of the combined screen includes a length L and a width H of the first reference region 71. The display device 2 is used as an example. A second reference region 72 is a minimum bounding rectangle of the display device 2, and a size of the display device 2 includes a length L₂ and a width H₂ of the second reference region 72. Because each display device is rectangular and has no frame, a second reference region of each display device is the same as a region of the display device.

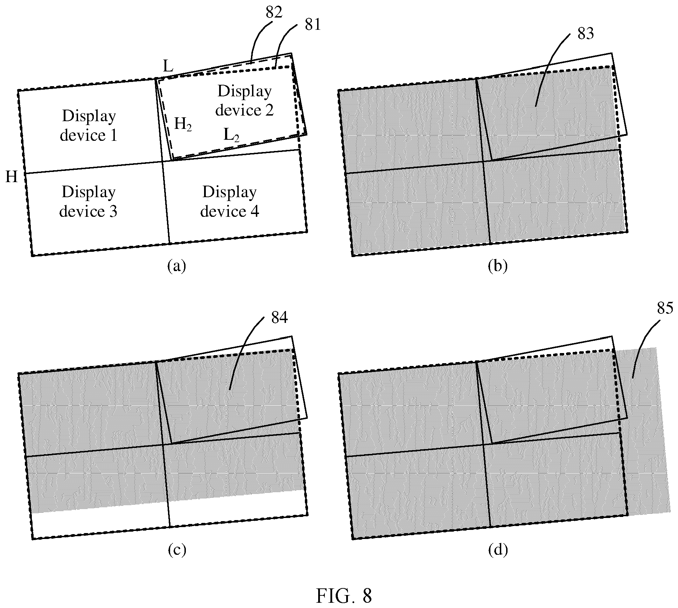

For example, in another implementation, as shown in (a) in FIG. 8, the combined screen includes a display device 1 to a display device 4, where (a) in FIG. 8 is the same as (a) in FIG. 7. A first reference region 81 is a maximum inscribed rectangle of the combined screen, and a size of the combined screen includes a length L and a width H of the first reference region 81. The display device 2 is used as an example. A second reference region 82 is a minimum bounding rectangle of the display device 2, and a size of the display device 2 includes a length L₂ and a width H₂ of the second reference region 82.

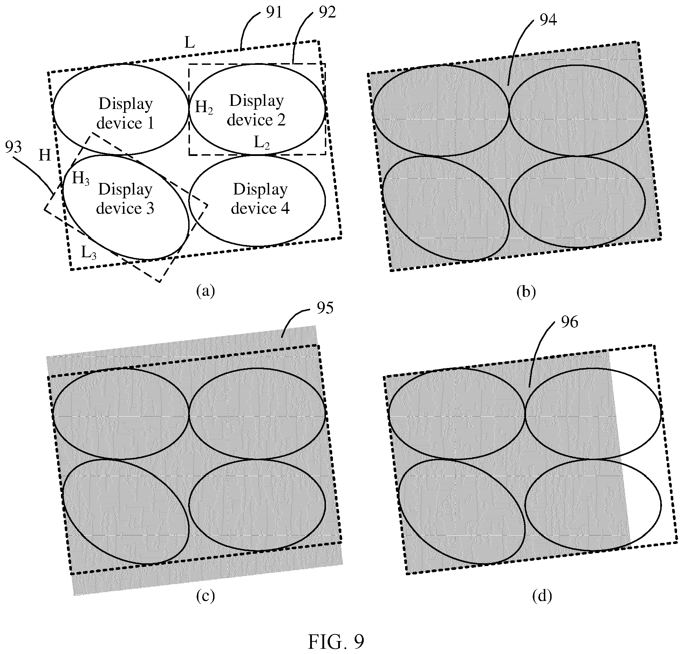

For example, in another implementation, as shown in (a) in FIG. 9, the combined screen includes a display device 1 to a display device 4, and the display device is elliptical, and has no frame. A first reference region 91 is a minimum bounding rectangle of the combined screen, and a size of the combined screen includes a length L and a width H of the first reference region 91. Angles of the display device 1, the display device 2, and the display device 4 are consistent. The display device 2 is used as an example, a second reference region 92 is a minimum bounding rectangle of the display device 2, and a size of the display device 2 includes a length L₂ and a width H₂ of the second reference region 92. An angle of the display device 3 is different from an angle of another display device. A second reference region 93 of the display device 3 is a minimum bounding rectangle of the display device 3, and a size of the display device 3 includes a length L₃ and a width H₃ of the second reference region 93. A size of the second reference region of each display device is the same.

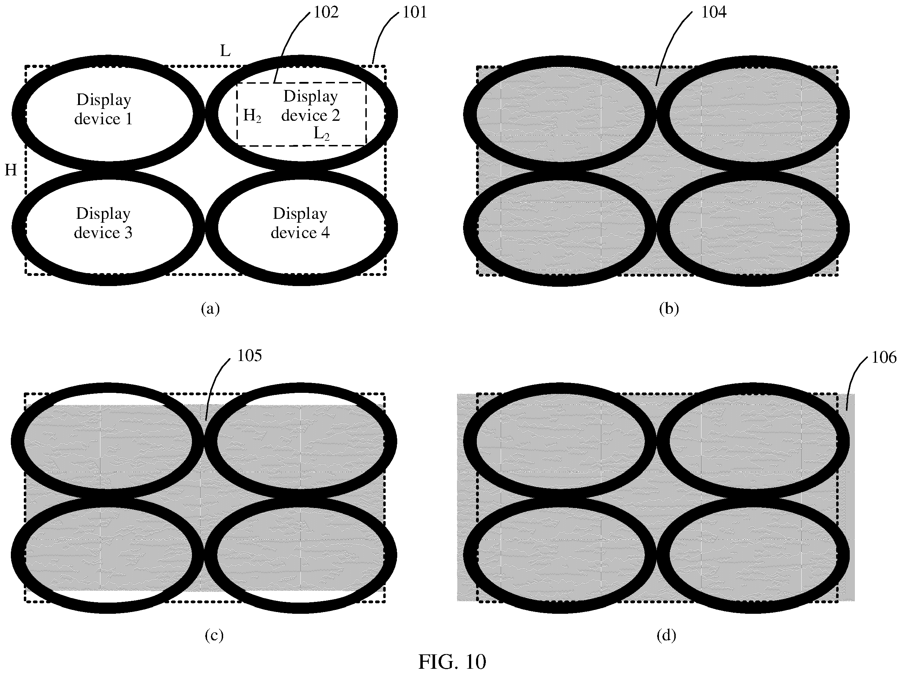

For example, in another implementation, as shown in (a) in FIG. 10, the combined screen includes a display device 1 to a display device 4, and the display device is elliptical, and has a frame. A first reference region 101 is a minimum bounding rectangle obtained after a frame of a display device is removed from the combined screen, and a size of the combined screen includes a length L and a width H of the first reference region 101. The display device 2 is used as an example. A second reference region 102 is a maximum inscribed rectangle obtained after a frame of the display device 2 is removed, and a size of the display device 2 includes a length L₂ and a width H₂ of the second reference region 102.

### 4. Reference image, image adjustment policy, and image display policy

In embodiments of this application, each display device may adjust a to-be-displayed image to a same display size. For ease of description, an adjusted to-be-displayed image is referred to as a reference image. For example, the image 62 shown in (d) in FIG. 6 is used. The reference image is related to a picture adjustment policy, a picture display policy, and a first reference region. The picture adjustment policy indicates a manner of filling the first reference region with the to-be-displayed image or the reference image, and the picture display policy indicates a display location of the to-be-displayed image or the reference image in the first reference region.

The picture adjustment policy may include a tile mode, a length alignment mode, a width alignment mode, and an adaptive mode.

The picture display policy may include but is not limited to any one of the following: center-displaying in a length direction of the first reference region, center-displaying in a width direction of the first reference region, center-displaying based on a center point of the first reference region, or displaying by using two adjacent sides of the first reference region as a reference.

Optionally, the picture adjustment policy and the picture display policy may be preset, or may be determined based on an actual situation of a display scenario.

### (1) Tile mode

In this mode, the reference image may fill the entire first reference region. The display device enlarges the to-be-displayed image in the length direction by using a first enlargement multiple in the length direction, and enlarges the to-be-displayed image in the width direction by using a second enlargement multiple in the width direction, to obtain the reference image. It can be seen that, in the tile mode, an enlargement multiple of the display device includes the first enlargement multiple and the second enlargement multiple. The first enlargement multiple and the second enlargement multiple may be the same, or may be different.

If the first enlargement multiple is the same as the second enlargement multiple, it indicates that an aspect ratio of the to-be-displayed image is the same as an aspect ratio of the first reference region, and the reference image is proportionally enlarged in the length direction and the width direction relative to the to-be-displayed image.

If the first enlargement multiple is different from the second enlargement multiple, it indicates that the aspect ratio of the to-be-displayed image is different from the aspect ratio of the first reference region, and the reference image is stretched/compressed in a horizontal direction/vertical direction in terms of viewing experience relative to the to-be-displayed image. The horizontal direction is the length direction, and the vertical direction is the width direction. For example, it is assumed that the aspect ratio of the to-be-displayed image is 1:1, and the aspect ratio of the first reference region is 3:2. In this case, the reference image is stretched in the horizontal direction or compressed in the vertical direction in terms of viewing experience relative to the to-be-displayed image, so that the reference image can fill the entire first reference region. For another example, it is assumed that the aspect ratio of the to-be-displayed image is 16:9, and the aspect ratio of the first reference region is 3:2. In this case, the reference image is compressed in the horizontal direction or stretched in the vertical direction in terms of viewing experience relative to the to-be-displayed image, so that the reference image can fill the entire first reference region.

For example, an image 73 shown in (b) in FIG. 7, an image 83 shown in (b) in FIG. 8, an image 94 shown in (b) in FIG. 9, or an image 104 shown in (b) in FIG. 10 is a reference image in the tile mode.

### (2) Length alignment mode

In this mode, the length direction is used as a reference, the reference image fills the first reference region in the length direction, and the reference image may fill the first reference region in the width direction, or may not fill the first reference region, or may exceed the first reference region. The display device separately enlarges the to-be-displayed image in the length direction and the width direction by using the first enlargement multiple in the length direction to obtain the reference image. It can be seen that, in the length alignment mode, the enlargement multiple of the display device includes the first magnification multiple.

When the reference image fills the first reference region in the width direction, it indicates that the aspect ratio of the to-be-displayed image is the same as the aspect ratio of the first reference region. In this case, the to-be-displayed image is proportionally enlarged as the reference image, the reference image fills the first reference region in both the length direction and the width direction, and display effect of the length alignment mode is the same as display effect of medium-proportion enlargement in the tile mode.

When the reference image fails to fill the first reference region in the width direction, it indicates that the aspect ratio of the to-be-displayed image is greater than the aspect ratio of the first reference region. In this case, an entire picture displayed on the combined screen has a blank display region in the width direction.

When the reference image exceeds the first reference region in the width direction, it indicates that the aspect ratio of the to-be-displayed image is less than the aspect ratio of the first reference region. In this case, an entire picture displayed on the combined screen is cropped out in the width direction, resulting in loss of a part of the picture.

For example, an image 74 shown in (c) in FIG. 7, an image 84 shown in (c) in FIG. 8, an image 95 shown in (c) in FIG. 9, or an image 105 shown in (c) in FIG. 10 is a reference image in the length alignment mode.

In (c) in FIG. 7, the aspect ratio of the to-be-displayed image is the same as the aspect ratio of the first reference region, and the image 74 in the length alignment mode fills the first reference region in both the length direction and the width direction.

In (c) in FIG. 8 and (c) in FIG. 10, the aspect ratio of the to-be-displayed image is greater than the aspect ratio of the first reference region, and the image 84 and the image 105 in the length alignment mode fill the first reference region in the length direction, and fail to fill the first reference region in the width direction. The difference lies in the image display policy. In (c) in FIG. 8, the image 84 is displayed by using a vertex in an upper left corner of the first reference region as a reference. In (c) in FIG. 10, the image 105 is displayed in the center in the width direction of the first reference region.

In (c) in FIG. 9, the aspect ratio of the to-be-displayed image is less than the aspect ratio of the first reference region, and the image 95 in the length alignment mode fills the first reference region in the length direction, and exceeds the first reference region in the width direction. The image 95 is displayed in the center in the first reference region.

### (3) Width alignment mode

In this mode, the width direction is used as a reference, the reference image fills the first reference region in the width direction, and the reference image may fill the first reference region in the length direction, or may not fill the first reference region, or may exceed the first reference region. The display device separately enlarges the to-be-displayed image in the length direction and the width direction by using the second enlargement multiple in the width direction to obtain the reference image. It can be seen that, in the width alignment mode, the enlargement multiple of the display device includes the second magnification multiple.

When the reference image fills the first reference region in the length direction, it indicates that the aspect ratio of the to-be-displayed image is the same as the aspect ratio of the first reference region. In this case, the to-be-displayed image is proportionally enlarged as the reference image, the reference image fills the first reference region in both the length direction and the width direction, and display effect of the width alignment mode is the same as display effect of medium-proportion enlargement in the tile mode.

When the reference image fails to fill the first reference region in the length direction, it indicates that the aspect ratio of the to-be-displayed image is less than the aspect ratio of the first reference region. In this case, an entire picture displayed on the combined screen has a blank display region in the length direction.

When the reference image exceeds the first reference region in the length direction, it indicates that the aspect ratio of the to-be-displayed image is greater than the aspect ratio of the first reference region. In this case, an entire picture displayed on the combined screen is cropped out in the length direction, resulting in loss of a part of the picture.

For example, an image 75 shown in (d) in FIG. 7, an image 85 shown in (d) in FIG. 8, an image 96 shown in (d) in FIG. 9, or an image 106 shown in (d) in FIG. 10 is a reference image in the width alignment mode.

In (d) in FIG. 7, the aspect ratio of the to-be-displayed image is the same as the aspect ratio of the first reference region, and the image 75 in the width alignment mode fills the first reference region in both the length direction and the width direction.

In (d) in FIG. 8 and (d) in FIG. 10, the aspect ratio of the to-be-displayed image is greater than the aspect ratio of the first reference region, and the image 85 and the image 106 in the width alignment mode fill the first reference region in the width direction, and exceed the first reference region in the length direction. The difference lies in the image display policy. In (d) in FIG. 8, the image 85 is displayed by using a vertex in an upper left corner of the first reference region as a reference. In (d) in FIG. 10, the image 106 is displayed in the center in the first reference region.

In (d) in FIG. 9, the aspect ratio of the to-be-displayed image is less than the aspect ratio of the first reference region, and the image 96 in the width alignment mode fills the first reference region in the width direction, and fails to fill the first reference region in the length direction. The image 96 is displayed by using a vertex in an upper left corner of the first reference region as a reference.

### (4) Adaptive mode

In this mode, the tile mode, the length alignment mode, or the width alignment mode is adaptively determined based on the aspect ratio of the to-be-displayed image and the aspect ratio of the first reference region, so that the reference image is first fully covered in the length direction or the width direction of the first reference region, thereby ensuring that a picture of the to-be-displayed image is not lost.

It is assumed that a size of the to-be-displayed image includes a length L₀ and a width H₀, and a size of the first reference region includes a length L and a width H. In this case, an aspect ratio of the to-be-displayed image is L₀/H₀, and an aspect ratio of the first reference region is L/H. When L0/H0>L/H, the length alignment mode is used. When L0/H0<L/H, the width alignment mode is used. When L0/H0=L/H, the tile mode, length alignment mode, or width alignment mode is used.

### 5. Display Parameter

In embodiments of this application, the display device processes a to-be-displayed image based on a display parameter, to obtain a reference image. The display parameter includes an enlargement multiple, a location offset, and an angle offset.

### (1) Enlargement multiple

An enlargement multiple indicates a proportion of enlarging the to-be-displayed image in a length direction and/or a width direction by the display device. Each display device in the combined screen enlarges the to-be-displayed image based on an enlargement multiple of each display device, so that the reference image corresponding to each display device has a same size.

The enlargement multiple includes the first enlargement multiple in the length direction and the second enlargement multiple in the width direction, and is related to the size of the first reference region, the size of the second reference region, and the picture adjustment policy. Refer to the foregoing related description, and details are not described herein again.

It is assumed that the size of the first reference region includes a length L and a width H. A size of the second reference region corresponding to the i^{th} display device in the combined screen includes a length Lᵢ and a width Hᵢ, and a pixel is lᵢ×hᵢ, where i is a positive integer. A size of the to-be-displayed image includes a length L₀ and a width H₀, and a pixel is l₀×h₀.

Optionally, in an implementation, for the i^{th} display device in the combined screen, the first enlargement multiple=L/Li, and the second enlargement multiple=H/Hᵢ.

Optionally, in another implementation, for the i^{th} display device in the combined screen, an equivalent resolution of the combined screen is (lᵢ×L/Lᵢ)×(hᵢ×H/Hᵢ). The first enlargement multiple=(lᵢ×L/Lᵢ)/l₀, and the second enlargement multiple=(hᵢ×H/Hᵢ)/h₀.

### (2) Location offset

A location offset indicates a relative location of the display device relative to the combined screen. Each display device in the combined screen may move the to-be-displayed image or the reference image based on a location offset of each display device, so that the reference image corresponding to each display device is located at a same location in the first reference region.

Optionally, the location offset of the display device is related to a first reference point in the first reference region, a second reference point in the second reference region, and a picture display policy.

The following describes the first reference point, the second reference point, and the location offset by using an example.

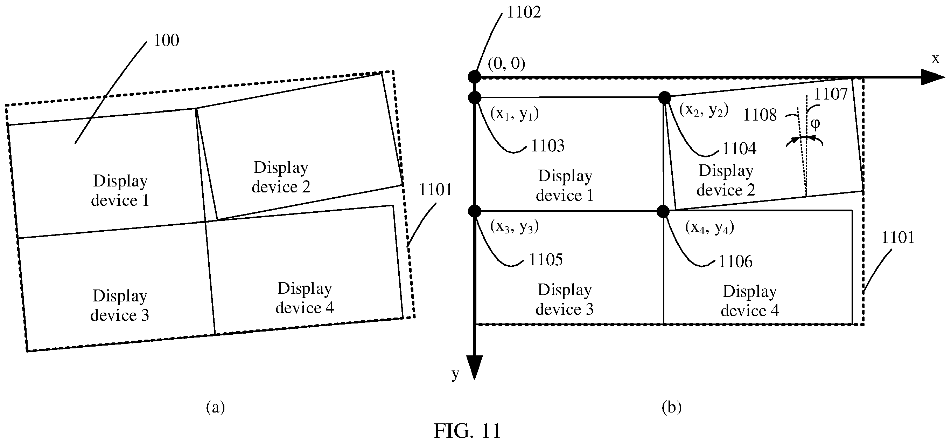

For example, FIG. 11 is a schematic diagram of a reference coordinate system according to an embodiment of this application. As shown in (a) in FIG. 11, the combined screen 100 includes a display device 1 to a display device 4. A first reference region 1101 is a minimum bounding rectangle of the combined screen 100. A reference coordinate system is constructed by using the first reference region 1101 as a reference, as shown in (b) in FIG. 11. An X-axis of the reference coordinate system is a length direction of the first reference region 1101, and a Y-axis is a width direction of the first reference region 1101. A first reference point of the first reference region 1101 is denoted as a point 1102, and coordinates of the point are denoted as (x₀, y₀). It is assumed that the point 1102 is an origin of the reference coordinate system, and coordinates of the origin are denoted as (0, 0). A second reference point of the display device 1 is an upper-left corner point 1103 of the second reference region of the display device 1, and coordinates of the second reference point are denoted as (x₁, y₁). Similarly, second reference points respectively corresponding to the display device 2, the display device 3, and the display device 4 are all upper-left corner points corresponding to the second reference region, and are sequentially denoted as a point 1104, a point 1105, and a point 1106, and coordinates of the points are sequentially denoted as (x₂, y₂), (x₃, y₃), and (x₄, y₄).

Optionally, for the tile mode, for example, as shown in (b) in FIG. 7, (b) in FIG. 8, (b) in FIG. 9, or (b) in FIG. 10, the reference image fills the first reference region, and the location offset of the display device is determined based on locations of the first reference point and the second reference point. The location offset of the i^{th} display device in the combined screen is (xᵢ, yᵢ).

Optionally, for the length alignment mode, in an implementation, the reference image is displayed by using the origin of the reference coordinate system as a reference, for example, as shown in (c) in FIG. 7 or (c) in FIG. 8, and the location offset of the display device is determined based on the locations of the first reference point and the second reference point. The location offset of the i^{th} display device in the combined screen is (xᵢ, yᵢ). In another implementation, the reference image is displayed in the center in the first reference region, for example, as shown in (c) in FIG. 9 or (c) in FIG. 10. It is assumed that a width of the first reference region is H, a width of the reference image is H', and the reference image needs to be offset by |(H-H')|/2 in a width direction relative to the first reference region. In this case, the location offset of the display device is determined based on the location of the first reference point, the location of the second reference point, the width H of the first reference region, and the width H' of the reference image. The location offset of the i^{th} display device in the combined screen is (xᵢ, yᵢ-(H-H')/2).

Optionally, for the width alignment mode, in an implementation, the reference image is displayed by using the origin of the reference coordinate system as a reference, for example, as shown in (d) in FIG. 7, (d) in FIG. 8 or (d) in FIG. 9, and the location offset of the display device is determined based on the locations of the first reference point and the second reference point. The location offset of the i^{th} display device in the combined screen is (xᵢ, yᵢ). In another implementation, the reference image is displayed in the center in the first reference region, for example, as shown in (d) in FIG. 10. It is assumed that a length of the first reference region is L, a length of the reference image is L', and the reference image needs to be offset by |(L-L')|/2 in a length direction relative to the first reference region. In this case, the location offset of the display device is determined based on the location of the first reference point, the location of the second reference point, the length L of the first reference region, and the length L' of the reference image. The location offset of the i^{th} display device in the combined screen is (xᵢ-(L-L')/2, yᵢ).

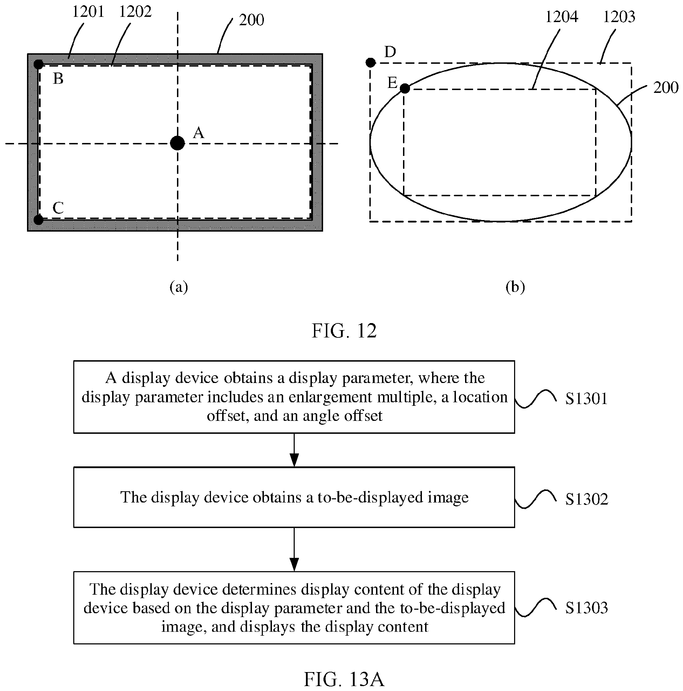

A location of the first reference point in the first reference region and a location of the second reference point in the second reference region are not limited in embodiments of this application. The following describes the second reference point with reference to FIG. 12. However, FIG. 12 does not constitute a limitation, and a principle of the second reference point is similar with the principle of the first reference point.

As shown in (a) in FIG. 12, the display device 200 has a frame 1201, and the second reference region of the display device 200 is a minimum bounding rectangle 1202 obtained after the frame is removed from the display device 200. Optionally, the second reference point of the display device 200 may be an upper-left corner point B of the minimum bounding rectangle 1202, a lower-left corner point C of the minimum bounding rectangle 1202, or a central point A of the minimum bounding rectangle 1202.

As shown in (b) in FIG. 12, the display device 200 has no frame, and is in an ellipse shape. Optionally, if the second reference region of the display device 200 is a minimum bounding rectangle 1203 of the display device 200, the second reference point of the display device 200 may be an upper-left corner point D of the minimum bounding rectangle 1203. Optionally, if the second reference region of the display device 200 is a maximum inscribed rectangle 1204 of the display device 200, the second reference point of the display device 200 may be an upper-left corner point E of the maximum inscribed rectangle 1204.

### (3) Angle offset

An angle offset indicates a relative rotation angle of the display device relative to the combined screen. Each display device in the combined screen may rotate the to-be-displayed image or the reference image based on an angle offset of each display device, so that the reference image corresponding to each display device is located at a same location in the first reference region.

Optionally, the angle offset may be an angle difference between a length direction/width direction of the second reference region of the display device and a length direction/width direction of the first reference region of the combined screen. To be specific, the angle offset may be an angle difference between the length direction of the second reference region and the length direction of the first reference region, or an angle difference between the width direction of the second reference region and the width direction of the first reference region, or an angle difference between the length direction of the second reference region and the width direction of the first reference region, or an angle difference between the width direction of the second reference region and the length direction of the first reference region.

With reference to FIG. 11, the following describes the angle offset in a reference coordinate system determined by the first reference region of the combined screen. For example, in the reference coordinate system shown in (b) in FIG. 11, a reference line 1107 is parallel to a Y-axis of the reference coordinate system, that is, is parallel to the width direction of the first reference region 1101. The reference line 1108 is parallel to the width direction of the second reference region of the display device 2. An included angle ϕ between the reference line 1107 and the reference line 1108 is an angle offset of the display device 2, that is, an angle offset ϕ of the display device 2 is an angle difference between the width direction of the second reference region of the display device 2 and the width direction of the first reference region of the combined screen. Similarly, it may be determined that angle offsets respectively corresponding to the display device 1, the display device 3, and the display device 4 are all 0 degrees.

The following describes the technical solutions of this application in detail with reference to specific embodiments. The following embodiments may be combined with each other, and a same or similar concept or process may not be described repeatedly in some embodiments.

The terms "first", "second", "third", "fourth", and the like (if any) in embodiments of this application are intended to distinguish between similar objects but do not necessarily indicate a specific order or sequence.

In descriptions of embodiments of this application, unless otherwise specified, "/" means "or". For example, A/B may represent A or B. In this specification, "and/or" describes only an association relationship for describing associated objects and represents that three relationships may exist. For example, A and/or B may represent the following three cases: Only A exists, both A and B exist, and only B exists.

In descriptions of embodiments of this application, unless otherwise stated, "a plurality of" means two or more than two.

It should be noted that, in embodiments of this application, a minimum bounding rectangle or a maximum inscribed rectangle of the combined screen or the display device may be calculated by using the conventional technology, and an angle offset of the display device may be calculated by using the conventional technology. Details are not described in embodiments of this application. For example, a minimum bounding rectangle of an envelope scatter may be calculated based on points (points) by using the Opencv software library.

FIG. 13A is a flowchart of an image processing method according to an embodiment of this application. The image processing method provided in this embodiment is executed by a display device and a control device. The display device may be any display device in a combined screen. As shown in FIG. 13A, the image processing method provided in this embodiment may include the following steps.

S1301: The display device obtains a display parameter, where the display parameter includes an enlargement multiple, a location offset, and an angle offset.

The display parameter is determined based on a location and an angle of the display device in the combined screen. The enlargement multiple indicates a proportion of enlarging a to-be-displayed image by the display device, the location offset indicates a relative location of the display device relative to the combined screen, and the angle offset indicates a relative rotation angle of the display device relative to the combined screen. Refer to the foregoing description. Details are not described herein again.

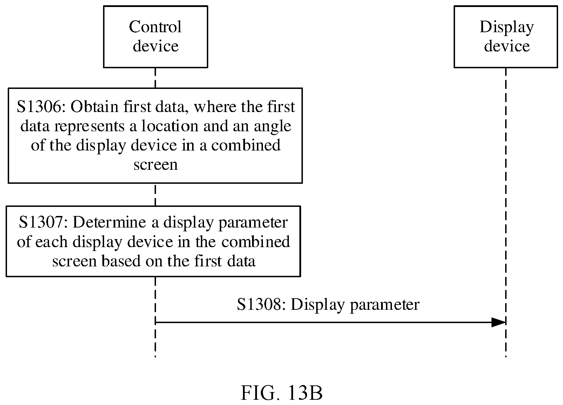

Optionally, in an implementation, as shown in FIG. 13B, in step S1301, that the display device obtains a display parameter may include the following steps.

S1306: The control device obtains first data, where the first data may represent a location and an angle of the display device in the combined screen.

S1307: The control device determines a display parameter of each display device in the combined screen based on the first data.

S1308: The control device sends a display parameter of the display device to each display device. Correspondingly, the display device receives the display parameter sent by the control device.

In this implementation, the control device determines the display parameter of each display device in the combined screen, and sends the display parameter to the display device. This avoids that each display device separately calculates a display parameter of the display device, and improves data processing efficiency of an image processing system.

Optionally, in another implementation, in step S1301, that the display device obtains a display parameter may include: The display device obtains first data, and determines the display parameter based on the first data.

In this implementation, the display device determines the display parameter of the display device, so that the display parameter can be more accurately determined based on an actual application scenario.

It may be understood that, a difference between the foregoing two manners of determining the display parameter lies in different execution bodies, but implementation principles are similar. The following uses an example in which the control device determines a display parameter for description.

That the control device determines a display parameter of the display device based on the first data may include:

The control device determines, based on the first data, a first reference region of the combined screen, a second reference region of each display device in the combined screen, a first reference point in the first reference region, and a second reference point in each second reference region.

The control device determines the enlargement multiple of each display device based on a size of the first reference region and a size of each second reference region, determines the location offset of each display device based on a location of the first reference point and a location of each second reference point, and determines the angle offset of each display device based on the first reference region and each second reference region.

Optionally, when the control device determines the enlargement multiple, a picture adjustment policy may be a preset policy, for example, may be preset to a tile mode, a length alignment mode, or a width alignment mode. That the control device determines the enlargement multiple of each display device based on a size of the first reference region and a size of each second reference region may include: The control device determines the enlargement multiple of each display device based on the preset picture adjustment policy, the size of the first reference region, and the size of each second reference region. In this implementation, the picture adjustment policy is preset, to simplify calculation complexity of the enlargement multiple.

Optionally, when the control device determines the enlargement multiple, the picture adjustment policy may be an adaptive mode. That the control device determines the enlargement multiple of each display device based on a size of the first reference region and a size of each second reference region may include: The control device determines the enlargement multiple of each display device based on the picture adjustment policy determined based on the adaptive mode, the size of the first reference region, and the size of each second reference region. In this implementation, flexibility and rationality of determining an enlargement multiple in different application scenarios are improved.

Optionally, when the control device determines the location offset, the picture display policy may be a preset policy. That the control device determines the location offset of each display device based on a location of the first reference point and a location of each second reference point may include: The control device determines the location offset of each display device based on the preset picture display policy, the location of the first reference point, and the location of each second reference point. In this implementation, the picture display policy is preset, to simplify calculation complexity of the location offset.

Optionally, before the control device determines the enlargement multiple of each display device based on the size of the first reference region and the size of each second reference region, the method may further include:

The control device establishes a reference coordinate system based on the first reference region. Correspondingly, the size of the first reference region, the size of the second reference region, the location of the first reference point, and the location of the second reference point are all based on the reference coordinate system.

Optionally, that the control device determines the angle offset of each display device based on the first reference region and each second reference region may include:
determining an included angle between a length direction of the first reference region and a length direction of the second reference region as the angle offset; or determining an included angle between a width direction of the first reference region and a width direction of the second reference region as the angle offset.

For the first reference region, the second reference region, the first reference point, the second reference point, the picture adjustment policy, the picture display policy, and the reference coordinate system, refer to the foregoing descriptions. For the display parameter of the display device in different scenarios, refer to the foregoing descriptions. Details are not described herein again.

Optionally, in an implementation, the first data includes location information of each display device that is obtained through measuring. Content of the location information is not limited in this embodiment. For example, the location information includes location coordinates of a key point on the display device. For example, the display device is rectangular, and the key point may include four vertices of the rectangle.

In this implementation, after the combined screen is assembled, the location information of the display device may be obtained by using an existing measurement means, so that data is obtained in a simple manner.

Optionally, in another implementation, the first data includes a target image obtained by photographing the combined screen when each display device in the combined screen displays a pure-color image. A device for photographing the combined screen is not limited in this embodiment. For example, the device may be a control device, or may be another photographing device. A color of the pure-color image is not limited in this embodiment. How to control the display device to display a pure-color image is not limited in this embodiment. For example, an app configured to manage the combined screen or the display device is installed on the control device, and a user controls the display device to enter a debugging mode by performing an operation in the app. The control device may send a debugging instruction to the display device in response to the operation of the user. Correspondingly, the display device enters the debugging mode based on the debugging instruction, and displays the pure-color image.

In this implementation, the first data includes the target image, and the first data is processed through image processing, so that the display parameter of the display device can be determined, and accuracy of determining the display parameter is improved.

Optionally, to further improve accuracy of determining the display parameter, before the control device determines the display parameter of the display device based on the first data, the method may further include: performing at least one of the following processing on the target image: distortion correction or perspective calibration.

Distortion of an image includes but is not limited to radial distortion or tangential distortion. The radial distortion means that light is more bent at a place far away from a center of a lens than at a place near the center of the lens. The radial distortion mainly includes barrel distortion and pincushion distortion. The tangential distortion is caused by the lens being not completely parallel to an image plane. The perspective calibration is also referred to as perspective correction or perspective control, and is a process of synthesizing or editing an image to obtain a result that conforms to a public understanding of the perspective distortion. The distortion correction or perspective calibration may use an existing method, which is not described in detail in this embodiment.

Optionally, the first data may further include at least one of the following: a picture adjustment policy and a picture display policy.

S1302: The display device obtains a to-be-displayed image.

Optionally, the display device may obtain a to-be-displayed image sent by the control device.

Optionally, the display device may obtain video data sent by the control device, and obtain a to-be-displayed image based on the video data.

S1303: The display device determines display content of the display device based on the display parameter and the to-be-displayed image, and displays the display content.

It can be learned that, according to the image processing method provided in this embodiment, the display device obtains a display parameter, where the display parameter is determined based on a location and an angle of the display device in a combined screen. Each display device in the combined screen processes the to-be-displayed image based on a display parameter of each display device, so that the to-be-displayed image may be adjusted to a same display size, and each display device separately displays a part of the image. According to the image processing method provided in this embodiment, the displayed image is corrected by using the image processing method, so that a sense of misalignment and a sense of division of a picture are reduced or even eliminated when the combined screen displays the entire picture, and the entire picture displayed by the combined screen is more unified and harmonious, thereby improving display effect of the combined screen.

Optionally, in step S1303, that the display device determines display content of the display device based on the display parameter and the to-be-displayed image may include:
separately enlarging, moving, and rotating the to-be-displayed image based on the enlargement multiple, the location offset, and the angle offset, to determine the display content of the display device.

This embodiment does not limit an execution sequence of enlarging, moving, and rotating, and the three may be randomly permutated and combined. For example, there are six permutations and combinations of enlarging, moving, and rotating in total: enlarging, moving, and rotating; enlarging, rotating, and moving; moving, enlarging, and rotating; rotating, enlarging, and moving; and rotating, moving, and enlarging.

Optionally, the separately enlarging, moving, and rotating the to-be-displayed image based on the enlargement multiple, the location offset, and the angle offset, to determine the display content of the display device may include:
separately enlarging, moving, and rotating the to-be-displayed image based on the enlargement multiple, the location offset, and the angle offset to obtain a reference image, and determining a partial image that corresponds to the display device and that is in the reference image as the display content of the display device.

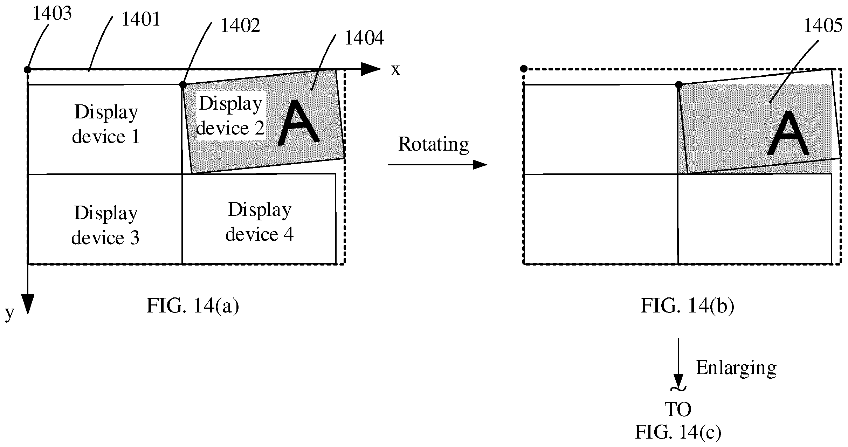

The following uses FIG. 14(a) to FIG. 14(e) to FIG. 16(a) to FIG. 16(e) as examples for description. The combined screen includes a display device 1 to a display device 4, and the first reference region is a minimum bounding rectangle of the combined screen. The reference coordinate system may be established based on the first reference region, where an X-axis of the reference coordinate system is the length direction of the first reference region, and a Y-axis of the reference coordinate system is the width direction of the first reference region. Processing of the to-be-displayed image by the display device 2 is used as an example. An angle offset of the display device 2 is ϕ, and is an angle difference between the width direction of the second reference region of the display device 2 and the width direction of the first reference region of the combined screen. For details, refer to the related description in FIG. 11. Details are not described herein again.

Optionally, in an implementation, the display device sequentially rotates, enlarges, and moves the to-be-displayed image. The following describes this implementation with reference to FIG. 14(a) to FIG. 14(e).

As shown in FIG. 14(a), it is assumed that the picture adjustment policy is the tile mode. A second reference point of the display device 2 is an upper-left corner point 1402 of a second reference region (not shown) of the display device 2, and coordinates of the second reference point are denoted as (x₂, y₂). A first reference point of the combined screen is an upper-left corner point 1403 of a first reference region 1401, namely, an origin of a reference coordinate system, and coordinates of the origin are (0, 0). A length of the second reference region of the display device 2 is L₂, and a width of the second reference region is H₂. A length of the first reference region 1401 is L, and a width of the first reference region 1401 is H. Display parameters of the display device 2 include: a first enlargement multiple L/L₂ in the length direction, a second enlargement multiple H/H₂ in the width direction, a location offset (x₂, y₂), and an angle offset -ϕ°. A negative sign in - ϕ° indicates clockwise rotation. The display device 2 sequentially rotates, enlarges, and moves a to-be-displayed image 1404 based on the point 1402.

First, the display device 2 rotates the to-be-displayed image 1404 clockwise by ϕ° based on the angle offset -ϕ° of the display device 2 to obtain an image 1405, as shown in FIG. 14(b). After the rotation, a length direction of the image 1405 is parallel to a length direction of the first reference region 1401, and a width direction of the image 1405 is parallel to a width direction of the first reference region 1401.

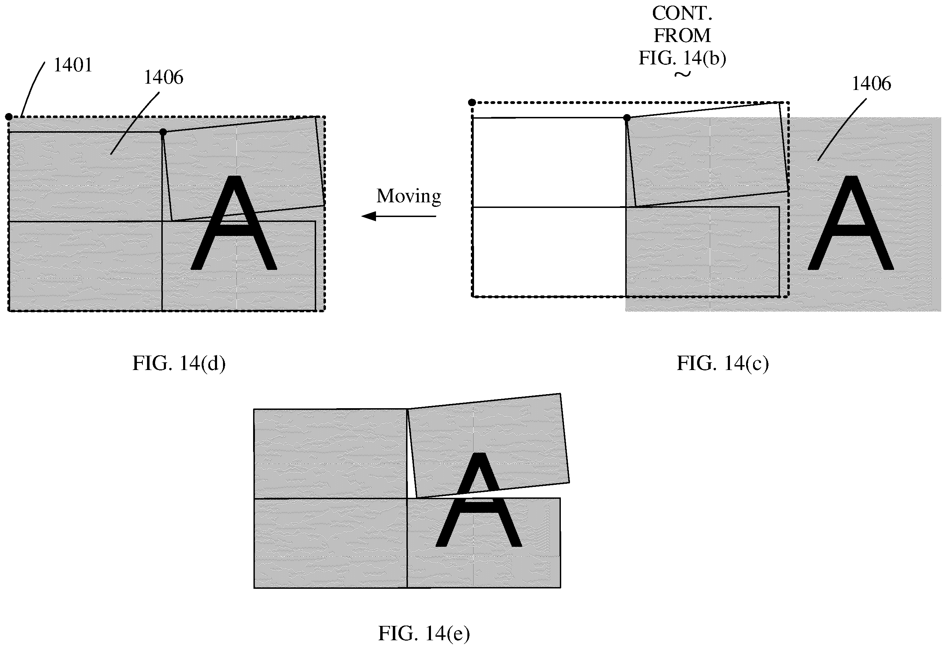

Then, the display device 2 enlarges the image 1405 by L/L₂ times in the length direction based on a first enlargement multiple L/L₂ of the display device 2, and enlarges the image 1405 by H/H₂ times in the width direction based on a second enlargement multiple H/H₂ of the display device 2, to obtain a reference image 1406, as shown in FIG. 14(c). After the enlargement, a length of the reference image 1406 is equal to the length of the first reference region 1401, and a width of the reference image 1406 is equal to the width of the first reference region 1401.

Finally, the display device 2 moves, based on the location offset (x₂, y₂) of the display device 2, the reference image 1406 by x₂ in a direction opposite to that of the x-axis, and by y₂ in a direction opposite to that of the y-axis. After the movement, the reference image 1406 covers the first reference region 1401, as shown in FIG. 14(d).

Therefore, the display device 2 finally displays display content in the rectangle shown by the display device 2 in FIG. 14(d).

It should be understood that another display device (for example, the display device 1, the display device 3, and the display device 4) in the combined screen may also determine, in a manner similar to the foregoing process, to-be-displayed display content of each display device. For final display effect of the combined screen, refer to FIG. 14(e).

It should be understood that, for content outside the four rectangles shown by the display device 1 to the display device 4 shown in FIG. 14(d), the combined screen to which the method provided in this embodiment of this application is applied does not display the content. Although a part of information in the to-be-displayed image cannot be displayed due to this processing policy, a sense of misalignment and a sense of division in terms of visual experience of a user can be avoided, and it is ensured that an image displayed on a combined screen viewed by the user is an image with smooth lines as a whole. In this way, a sense of division and a sense of division caused by a frame and/or a location deviation and/or an angular deviation of a display device in the combined screen are effectively resolved. The method provided in this embodiment of this application can also be directly applied to a combined screen including an abnormal-shaped display device and/or display devices with different aspect ratios, and has superior scalability.

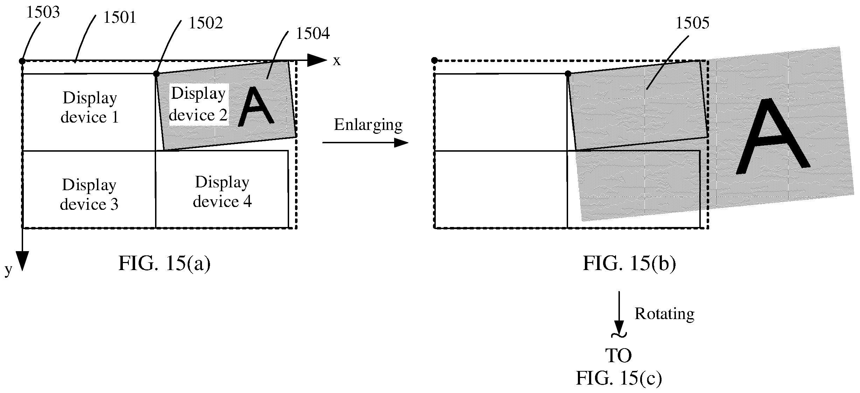

Optionally, in another implementation, the display device sequentially enlarges, rotates, and moves the to-be-displayed image. The following describes this implementation with reference to FIG. 15(a) to FIG. 15(e).

As shown in FIG. 15(a), it is assumed that the picture adjustment policy is the length alignment mode, an aspect ratio of the to-be-displayed image is greater than an aspect ratio of the first reference region, and the picture display policy is to display in the center in the width direction of the first reference region. A second reference point of the display device 2 is an upper-left corner point 1502 of a second reference region (not shown) of the display device 2, and coordinates of the second reference point are denoted as (x₂, y₂). A first reference point of the combined screen is an upper-left corner point 1503 of a first reference region 1501, namely, an origin of a reference coordinate system, and coordinates of the origin are (0, 0). A length of the second reference region of the display device 2 is L₂, and a width of the second reference region is H₂. A length of the first reference region 1501 is L, and a width of the first reference region 1501 is H. Display parameters of the display device 2 include: a first enlargement multiple L/L₂ in the length direction, a location offset (x₂, y₂), and an angle offset -ϕ°. A negative sign in -ϕ° indicates clockwise rotation. The display device 2 sequentially enlarges, rotates, and moves a to-be-displayed image 1504 based on the point 1502.

First, the display device 2 enlarges the image 1504 by L/L₂ times in both the length direction and the width direction based on the enlargement multiple L/L₂ of the display device 2, to obtain an image 1505, as shown in FIG. 15(b). After the enlargement, a length of the image 1505 is equal to the length of the first reference region 1501.

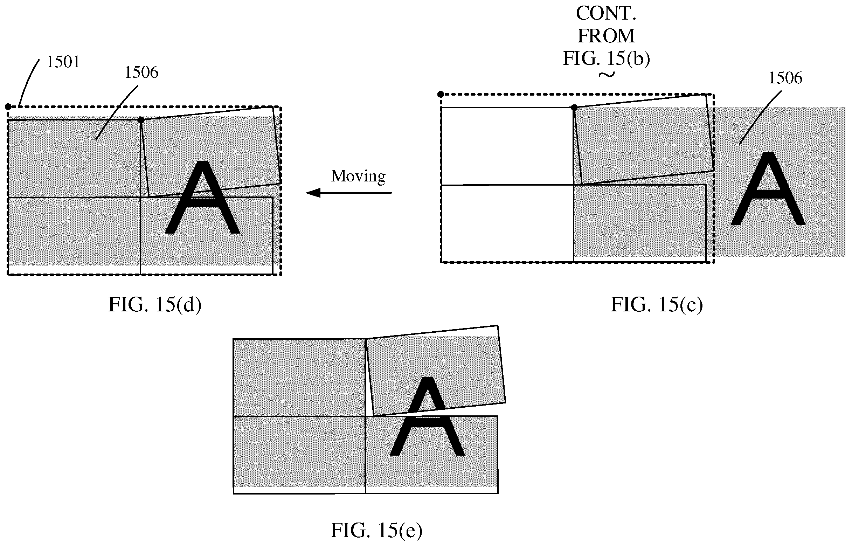

Then, the display device 2 rotates the image 1505 clockwise by ϕ° based on the angle offset -ϕ° of the display device 2 to obtain a reference image 1506, as shown in FIG. 15(c). After the rotation, a length direction of the reference image 1506 is parallel to a length direction of the first reference region 1501, and a width direction of the reference image 1506 is parallel to a width direction of the first reference region 1501.

Finally, the display device 2 moves, based on the location offset (x₂, y₂) of the display device 2, the reference image 1506 by x₂ in a direction opposite to that of the x-axis, and by y₂ in a direction opposite to that of the y-axis, as shown in FIG. 15(d). After the movement, the reference image 1506 covers the length direction of the first reference region 1501, and is displayed in the center in the width direction.

Another display device (for example, the display device 1, the display device 3, and the display device 4) in the combined screen may also determine, in a manner similar to the foregoing process, to-be-displayed display content of each display device. For final display effect of the combined screen, refer to FIG. 15(e). It can be seen that, although a part of information in the to-be-displayed image is chopped out and cannot be displayed, a sense of misalignment and a sense of division in terms of visual experience of a user are avoided, and it is ensured that an image displayed on a combined screen viewed by the user is an image with smooth lines as a whole.

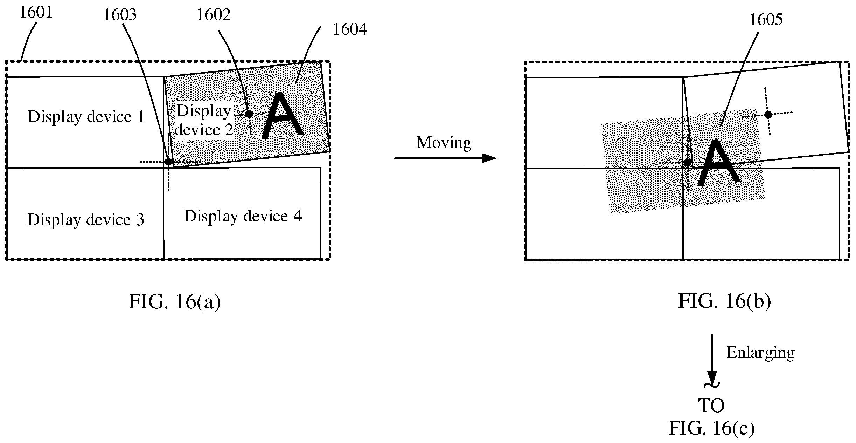

Optionally, in still another implementation, the display device sequentially moves, enlarges, and rotates the to-be-displayed image. The following describes this implementation with reference to FIG. 16(a) to FIG. 16(e).

As shown in FIG. 16(a), it is assumed that the picture adjustment policy is the length alignment mode, an aspect ratio of the to-be-displayed image is greater than an aspect ratio of the first reference region, and the picture display policy is to display in the center in the width direction of the first reference region. Sameness between FIG. 16(a) to FIG. 16(e) and FIG. 15(a) to FIG. 15(e) lies in the following: The to-be-displayed image, the combined screen, and the display device have a same size. A difference between FIG. 16(a) to FIG. 16(e) and FIG. 15(a) to FIG. 15(e) lies in the following: In FIG. 16(a) to FIG. 16(e), a second reference point of the display device 2 is a center point 1602 of a second reference region (not shown) of the display device 2, and coordinates of the second reference point are denoted as (x₅, y₅). A first reference point of the combined screen is a center point 1603 of the first reference region 1601, and coordinates of the center point 1603 are denoted as (x₀, y₀). Display parameters of the display device 2 include: a first enlargement multiple L/L₂ in the length direction, a location offset (x₂-x₀, y₂-y₀), and an angle offset -ϕ°. The display device 2 sequentially moves, enlarges, and rotates a to-be-displayed image 1604 based on the point 1602.

First, the display device 2 moves, based on the location offset (x₂-x₀, y₂-y₀) of the display device 2, the to-be-displayed image 1604 by x₂-x₀ in a direction opposite to that of the x-axis, and by y₂-y₀ in a direction opposite to that of the y-axis, to obtain an image 1605, as shown in FIG. 16(b). After the movement, a center point of the image 1605 is located at a center point of the first reference region 1601.

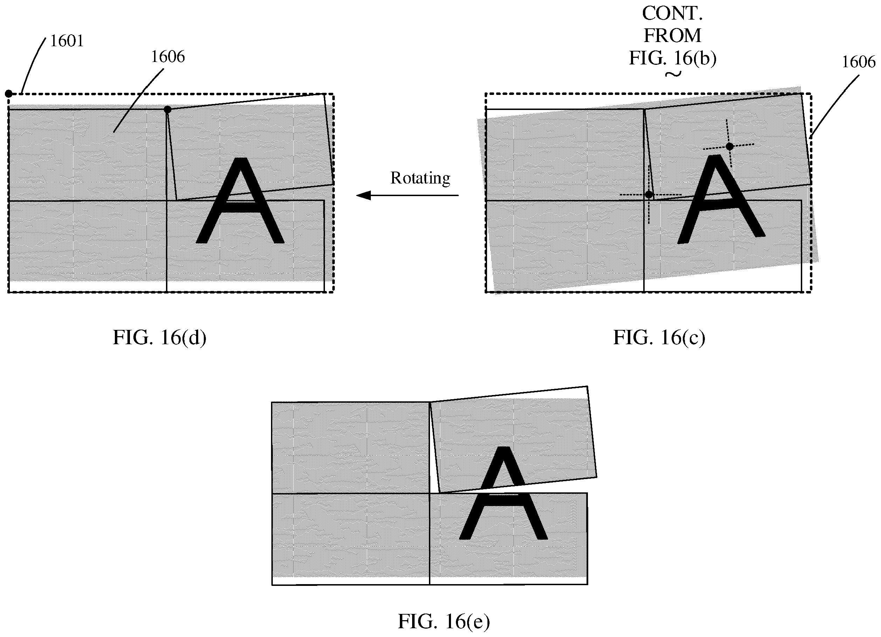

Then, the display device 2 enlarges the image 1605 by L/L₂ times in both the length direction and the width direction based on the enlargement multiple L/L₂ of the display device 2, to obtain a reference image 1606, as shown in FIG. 16(c). After the enlargement, a length of the image 1606 is equal to the length of the first reference region 1601.

Finally, the display device 2 rotates the reference image 1606 clockwise by ϕ° based on the angle offset -ϕ° of the display device 2, as shown in FIG. 16(d). After the rotation, a length direction of the reference image 1606 is parallel to the length direction of the first reference region 1601, a width direction of the reference image 1606 is parallel to the width direction of the first reference region 1601, and the reference image 1606 covers the length direction of the first reference region 1601 and is displayed in the center in the width direction.

Another display device (for example, the display device 1, the display device 3, and the display device 4) in the combined screen may also determine, in a manner similar to the foregoing process, to-be-displayed display content of each display device. For final display effect of the combined screen, refer to FIG. 16(e), which is the same as FIG. 15(e).

It can be learned that, although an execution sequence of enlarging, moving, and rotating a to-be-displayed image by a display device is different, display effect of the combined screen is the same. In this way, a sense of misalignment and a sense of division in terms of visual experience of a user are avoided, and it is ensured that an image displayed on a combined screen viewed by the user is an image with smooth lines as a whole.

It may be understood that, to implement the foregoing functions, the display device and the control device include corresponding hardware and/or software modules for implementing the functions. In combination with example algorithm steps described in embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application with reference to embodiments, but it should not be considered that the implementation goes beyond the scope of this application.

In embodiments of this application, the display device and the control device may be divided into function modules based on the foregoing method examples. For example, each function module may be obtained through division based on each corresponding function, or two or more functions may be integrated into one module. It should be noted that, in embodiments of this application, module division is an example, and is merely a logical function division. During actual implementation, another division manner may be used. It should be noted that a name of a module in embodiments of this application is an example, and the name of the module is not limited during actual implementation.

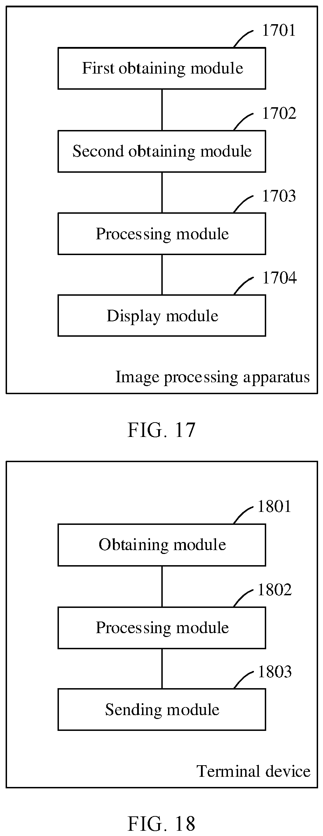

FIG. 17 is a schematic diagram of a structure of an image processing apparatus according to an embodiment of this application. The image processing apparatus provided in this embodiment may be applied to a display device. As shown in FIG. 17, the image processing apparatus includes:
a first obtaining module 1701, configured to obtain a display parameter, where the display parameter includes an enlargement multiple, a location offset, and an angle offset, the enlargement multiple indicates a proportion of enlarging a to-be-displayed image by the display device, the location offset indicates a relative location of the display device relative to a combined screen, and the angle offset indicates a relative rotation angle of the display device relative to the combined screen, and the combined screen includes a plurality of display devices;
a second obtaining module 1702, configured to obtain the to-be-displayed image;
a processing module 1703, configured to determine display content of the display device based on the display parameter and the to-be-displayed image; and
a display module 1704 configured to display the display content.

Optionally, the processing module 1703 is further configured to:
separately enlarge, move, and rotate the to-be-displayed image based on the enlargement multiple, the location offset, and the angle offset, to determine the display content of the display device.

Optionally, the processing module 1703 is further configured to:
separately enlarge, move, and rotate the to-be-displayed image based on the enlargement multiple, the location offset, and the angle offset to obtain a reference image, and determine a partial image that corresponds to the display device and that is in the reference image as the display content of the display device.

Optionally, the processing module 1703 is further configured to:
enlarge the to-be-displayed image based on the enlargement multiple to obtain a first intermediate image;
rotate the first intermediate image based on the angle offset to obtain a second intermediate image; and
move the second intermediate image based on the location offset to obtain the reference image.

Optionally, each display device in the combined screen corresponds to the reference image of a same size.

Optionally, the first obtaining module 1701 is configured to:
receive a display parameter sent by a control device.

Optionally, the second obtaining module 1702 is configured to:
receive the to-be-displayed image sent by the control device.

Optionally, the first obtaining module 1701 is configured to:
obtain first data, where the first data represents a location and an angle of the display device in the combined screen; and
determine the display parameter based on the first data.

Optionally, the first obtaining module 1701 is configured to:
determine, based on the first data, a first reference region of the combined screen, a second reference region of the display device, a first reference point in the first reference region, and a second reference point in the second reference region, where both the first reference region and the second reference region are rectangular; and
determine the enlargement multiple based on a size of the first reference region and a size of the second reference region, determine the location offset based on a location of the first reference point and a location of the second reference point, and determine the angle offset based on the first reference region and the second reference region.

Optionally, the first obtaining module 1701 is configured to:
obtain a picture adjustment policy, where the picture adjustment policy indicates a manner of filling the first reference region with the reference image; and
determine the enlargement multiple based on the picture adjustment policy, the size of the first reference region, and the size of the second reference region.

Optionally, the picture adjustment policy includes at least one of the following: a tile mode, a length alignment mode, a width alignment mode, and an adaptive mode.

In the tile mode, the reference image fills the first reference region in both a length direction and a width direction.

In the length alignment mode, the reference image fills the first reference region in the length direction.

In the width alignment mode, the reference image fills the first reference region in the width direction.

In the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the width alignment mode, or the width alignment mode.

Optionally, the first obtaining module 1701 is configured to:
if the picture adjustment policy is the tile mode, determine a first enlargement multiple in the length direction based on a length of the first reference region and a length of the second reference region, determine a second enlargement multiple in the width direction based on a width of the first reference region and a width of the second reference region, and determine the first enlargement multiple and the second enlargement multiple as the enlargement multiple;
if the picture adjustment policy is the length alignment mode, determine the first enlargement multiple in the length direction based on the length of the first reference region and the length of the second reference region, and determine the first enlargement multiple as the enlargement multiple; and
if the picture adjustment policy is the width alignment mode, determine a second enlargement multiple in the width direction based on a width of the first reference region and a width of the second reference region, and determine the second enlargement multiple as the enlargement multiple.

Optionally, the first obtaining module 1701 is configured to:
obtain a picture display policy, where the picture display policy indicates a display location of the reference image in the first reference region; and
determine the location offset based on the picture display policy, the location of the first reference point, and the location of the second reference point.

Optionally, the first obtaining module 1701 is further configured to
before the location offset is determined based on the location of the first reference point and the location of the second reference point, establish a reference coordinate system based on the first reference region; and
obtain coordinates of the first reference point and the second reference point in the reference coordinate system.

Optionally, the first obtaining module 1701 is configured to:
determine an included angle between a length direction of the first reference region and a length direction of the second reference region as the angle offset; or
determine an included angle between a width direction of the first reference region and a width direction of the second reference region as the angle offset.

Optionally, the first reference region is a minimum bounding rectangle or a maximum inscribed rectangle of the combined screen.

Optionally, the first reference region is a minimum bounding rectangle or a maximum inscribed rectangle of an effective region of the combined screen, and the effective region of the combined screen is a region obtained after a frame of each display device is removed from the combined screen.

Optionally, the second reference region is a minimum bounding rectangle or a maximum inscribed rectangle of the display device.

Optionally, the second reference region is a minimum bounding rectangle or a maximum inscribed rectangle of an effective region of the display device, and the effective region of the display device is a region obtained after the frame of the display device is removed.

Optionally, the first data includes location information of each display device in the combined screen.

Optionally, the first data includes a target image, and the target image is an image obtained by photographing the combined screen when each display device in the combined screen displays a pure-color image.

The image processing apparatus provided in this embodiment is configured to perform an operation performed by the display device in the foregoing method embodiment. Technical principles and technical effects are similar. Details are not described herein again.

FIG. 18 is another schematic diagram of a structure of an image processing apparatus according to an embodiment of this application. The image processing apparatus provided in this embodiment may be applied to a control device. As shown in FIG. 18, the image processing apparatus includes:
an obtaining module 1801, configured to obtain first data, where the first data represents a location and an angle of each display device in a combined screen, and the combined screen includes the plurality of display devices;
a processing module 1802, configured to determine a display parameter of each display device based on the first data, where the display parameter includes an enlargement multiple, a location offset, and an angle offset, the enlargement multiple indicates a proportion of enlarging a to-be-displayed image by the display device, the location offset indicates a relative location of the display device relative to the combined screen, and the angle offset indicates a relative rotation angle of the display device relative to the combined screen; and
a sending module 1803, configured to send the corresponding display parameter to each display device.

Optionally, the processing module 1802 is further configured to:
determine, based on the first data, a first reference region of the combined screen, a second reference region of each display device, a first reference point in the first reference region, and a second reference point in each second reference region, where both the first reference region and the second reference region are rectangular; and
for each display device, determine the enlargement multiple of the display device based on a size of the first reference region and a size of the second reference region of the display device, determine the location offset of the display device based on a location of the first reference point and a location of the second reference point of the display device, and determine the angle offset of the display device based on the first reference region and the second reference region of the display device.

Optionally, the processing module 1802 is further configured to:
obtain a picture adjustment policy, where the picture adjustment policy indicates a manner of filling the first reference region with the to-be-displayed image; and
determine the enlargement multiple based on the picture adjustment policy, the size of the first reference region, and the size of the second reference region.

Optionally, the picture adjustment policy includes at least one of the following: a tile mode, a length alignment mode, a width alignment mode, and an adaptive mode.

In the tile mode, the to-be-displayed image fills the first reference region in both a length direction and a width direction.

In the length alignment mode, the to-be-displayed image fills the first reference region in the length direction.

In the width alignment mode, the to-be-displayed image fills the first reference region in the width direction.

In the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the width alignment mode, or the width alignment mode.

Optionally, the processing module 1802 is further configured to:
if the picture adjustment policy is the tile mode, determine a first enlargement multiple in the length direction based on a length of the first reference region and a length of the second reference region, determine a second enlargement multiple in the width direction based on a width of the first reference region and a width of the second reference region, and determine the first enlargement multiple and the second enlargement multiple as the enlargement multiple;
if the picture adjustment policy is the length alignment mode, determine the first enlargement multiple in the length direction based on the length of the first reference region and the length of the second reference region, and determine the first enlargement multiple as the enlargement multiple; and
if the picture adjustment policy is the width alignment mode, determine a second enlargement multiple in the width direction based on a width of the first reference region and a width of the second reference region, and determine the second enlargement multiple as the enlargement multiple.

Optionally, the processing module 1802 is further configured to:
obtain a picture display policy, where the picture display policy indicates a display location of the to-be-displayed image in the first reference region; and
determine the location offset based on the picture display policy, the location of the first reference point, and the location of the second reference point.

Optionally, the processing module 1802 is further configured to:
before the location offset is determined based on the location of the first reference point and the location of the second reference point, establish a reference coordinate system based on the first reference region; and
obtain coordinates of the first reference point and the second reference point in the reference coordinate system.

Optionally, the processing module 1802 is further configured to:
determine an included angle between a length direction of the first reference region and a length direction of the second reference region as the angle offset; or
determine an included angle between a width direction of the first reference region and a width direction of the second reference region as the angle offset.

Optionally, the first reference region is a minimum bounding rectangle or a maximum inscribed rectangle of the combined screen.

Optionally, the first reference region is a minimum bounding rectangle or a maximum inscribed rectangle of an effective region of the combined screen, and the effective region of the combined screen is a region obtained after a frame of each display device is removed from the combined screen.

Optionally, the second reference region of the display device is a minimum bounding rectangle or a maximum inscribed rectangle of the display device.

Optionally, the second reference region of the display device is a minimum bounding rectangle or a maximum inscribed rectangle of an effective region of the display device, and the effective region of the display device is a region obtained after the frame of the display device is removed.

Optionally, the first data includes location information of each display device in the combined screen.

Optionally, the first data includes a target image, and the target image is an image obtained by photographing the combined screen when each display device in the combined screen displays a pure-color image.

The image processing apparatus provided in this embodiment is configured to perform an operation performed by the control device in the foregoing method embodiment. Technical principles and technical effects are similar. Details are not described herein again.

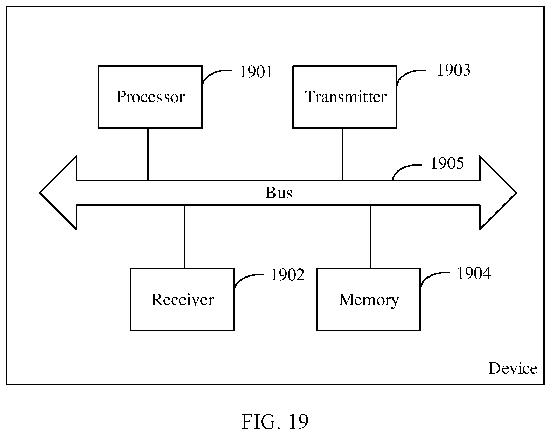

FIG. 19 shows a structure of a device according to an embodiment of this application. The device may be a display device or a control device. The device includes a processor 1901, a receiver 1902, a transmitter 1903, a memory 1904, and a bus 1905. The processor 1901 includes one or more processing cores. The processor 1901 runs a software program and a module, to execute various functional applications and perform information processing. The receiver 1902 and the transmitter 1903 may be implemented as a communication assembly, and the communication assembly may be a baseband chip. The memory 1904 is connected to the processor 1901 by using the bus 1905. The memory 1904 may be configured to store at least one program instruction, and the processor 1901 is configured to execute the at least one program instruction, to implement the technical solutions in the foregoing embodiments. Implementation principles and technical effects thereof are similar to those of the foregoing related method embodiments. Details are not described herein again.

After the device is powered on, the processor can read a software program in the memory, interpret and execute instructions of the software program, and process data of the software program. When the processor needs to send data through an antenna, after performing baseband processing on to-be-sent data, the processor outputs a baseband signal to a control circuit in the control circuit. The control circuit performs radio frequency processing on the baseband signal and then sends a radio frequency signal to the outside in the form of an electromagnetic wave through the antenna. When data is sent to the device, the control circuit receives a radio frequency signal through the antenna, converts the radio frequency signal into the baseband signal, and outputs the baseband signal to the processor. The processor converts the baseband signal into data and processes the data.

Persons skilled in the art may understand that for ease of description, FIG. 19 shows only one memory and one processor. In an actual device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process communication data, and the central processing unit is mainly configured to execute a software program and process data of the software program. Persons skilled in the art may understand that the baseband processor and the central processing unit may be integrated into one processor, or may be independent processors, and are connected by using a bus or the like. Persons skilled in the art may understand that the device may include a plurality of baseband processors to adapt to different network standards, and the device may include a plurality of central processing units to enhance processing capabilities of the device, and parts of the device may be connected by using various buses. The baseband processor may alternatively be expressed as a baseband processing circuit or a baseband processing chip. The central processing unit may alternatively be expressed as a central processing circuit or a central processing chip. The function of processing a communication protocol and the communication data may be built in the processor, or may be stored in the memory in a form of a software program, and the processor executes the software program to implement a baseband processing function. The memory may be integrated into the processor, or may be independent of the processor. The memory includes a cache Cache, and may store frequently accessed data/instructions.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can be configured to carry or store expected program code in a form of an instruction structure or a data structure and that can be accessed by a computer, but is not limited thereto.

The memory in embodiments of this application may alternatively be a circuit or any other apparatus that can implement a storage function, and is configured to store the program instructions and/or the data. All or a part of the method provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on a device, the device is enabled to perform the technical solutions in the foregoing embodiments. An implementation principle and technical effect of the computer program product are similar to those of the foregoing related embodiments. Details are not described herein again. The device may be a display device or a control device.

An embodiment of this application provides a computer-readable storage medium, where the computer-readable storage medium stores program instructions. When the program instructions are executed by a device, the device is enabled to perform the technical solutions in the foregoing embodiments. Implementation principles and technical effects thereof are similar to those of the foregoing related embodiments. Details are not described herein again. The device may be a display device or a control device.

In conclusion, the foregoing embodiments are merely intended for describing the technical solutions of this application instead of limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An image processing method, applied to a display device, wherein the method comprises:
obtaining a display parameter, wherein the display parameter comprises an enlargement multiple, a location offset, and an angle offset, the enlargement multiple indicates a proportion of enlarging a to-be-displayed image by the display device, the location offset indicates a relative location of the display device relative to a combined screen, the angle offset indicates a relative rotation angle of the display device relative to the combined screen, and the combined screen comprises a plurality of display devices;
obtaining the to-be-displayed image; and
determining display content of the display device based on the display parameter and the to-be-displayed image, and displaying the display content.

2. The method according to claim 1, wherein the determining display content of the display device based on the display parameter and the to-be-displayed image comprises:
separately enlarging, moving, and rotating the to-be-displayed image based on the enlargement multiple, the location offset, and the angle offset, to determine the display content of the display device.

3. The method according to claim 2, wherein the separately enlarging, moving, and rotating the to-be-displayed image based on the enlargement multiple, the location offset, and the angle offset, to determine the display content of the display device comprises:
separately enlarging, moving, and rotating the to-be-displayed image based on the enlargement multiple, the location offset, and the angle offset to obtain a reference image, and determining a partial image that corresponds to the display device and that is in the reference image as the display content of the display device.

4. The method according to claim 3, wherein the separately enlarging, moving, and rotating the to-be-displayed image based on the enlargement multiple, the location offset, and the angle offset to obtain a reference image comprises:
enlarging the to-be-displayed image based on the enlargement multiple to obtain a first intermediate image;
rotating the first intermediate image based on the angle offset to obtain a second intermediate image; and
moving the second intermediate image based on the location offset to obtain the reference image.

5. The method according to claim 3 or 4, wherein each display device in the combined screen corresponds to the reference image of a same size.

6. The method according to any one of claims 1 to 5, wherein the obtaining a display parameter comprises:
receiving the display parameter sent by a control device.

7. The method according to any one of claims 1 to 6, wherein the obtaining the to-be-displayed image comprises:
receiving the to-be-displayed image sent by the control device.

8. An image processing method, applied to a control device, wherein the method comprises:
obtaining first data, wherein the first data represents a location and an angle of each display device in a combined screen, and the combined screen comprises a plurality of display devices;
determining a display parameter of each display device based on the first data, wherein the display parameter comprises an enlargement multiple, a location offset, and an angle offset, the enlargement multiple indicates a proportion of enlarging a to-be-displayed image by the display device, the location offset indicates a relative location of the display device relative to the combined screen, and the angle offset indicates a relative rotation angle of the display device relative to the combined screen; and
sending the corresponding display parameter to each display device.

9. The method according to claim 8, wherein the determining a display parameter of each display device based on the first data comprises:
determining, based on the first data, a first reference region of the combined screen, a second reference region of each display device, a first reference point in the first reference region, and a second reference point in each second reference region, wherein both the first reference region and the second reference region are rectangular; and
for each display device, determining the enlargement multiple of the display device based on a size of the first reference region and a size of the second reference region of the display device, determining the location offset of the display device based on a location of the first reference point and a location of the second reference point of the display device, and determining the angle offset of the display device based on the first reference region and the second reference region of the display device.

10. The method according to claim 9, wherein the determining the enlargement multiple of the display device based on a size of the first reference region and a size of the second reference region of the display device comprises:
obtaining a picture adjustment policy, wherein the picture adjustment policy indicates a manner of filling the first reference region with the to-be-displayed image; and
determining the enlargement multiple based on the picture adjustment policy, the size of the first reference region, and the size of the second reference region.

11. The method according to claim 10, wherein the picture adjustment policy comprises at least one of the following: a tile mode, a length alignment mode, a width alignment mode, and an adaptive mode, wherein
in the tile mode, the to-be-displayed image fills the first reference region in both a length direction and a width direction;
in the length alignment mode, the to-be-displayed image fills the first reference region in the length direction;
in the width alignment mode, the to-be-displayed image fills the first reference region in the width direction; and
in the adaptive mode, if an aspect ratio of the to-be-displayed image is greater than an aspect ratio of the first reference region, the adaptive mode is specifically the length alignment mode; if an aspect ratio of the to-be-displayed image is less than an aspect ratio of the first reference region, the adaptive mode is specifically the width alignment mode; or if an aspect ratio of the to-be-displayed image is equal to an aspect ratio of the first reference region, the adaptive mode is specifically the tile mode, the width alignment mode, or the width alignment mode.

12. The method according to claim 11, wherein the determining the enlargement multiple based on the picture adjustment policy, the size of the first reference region, and the size of the second reference region comprises:
if the picture adjustment policy is the tile mode, determining a first enlargement multiple in the length direction based on a length of the first reference region and a length of the second reference region, determining a second enlargement multiple in the width direction based on a width of the first reference region and a width of the second reference region, and determining the first enlargement multiple and the second enlargement multiple as the enlargement multiple;
if the picture adjustment policy is the length alignment mode, determining a first enlargement multiple in the length direction based on a length of the first reference region and a length of the second reference region, and determining the first enlargement multiple as the enlargement multiple; or
if the picture adjustment policy is the width alignment mode, determining a second enlargement multiple in the width direction based on a width of the first reference region and a width of the second reference region, and determining the second enlargement multiple as the enlargement multiple.

13. The method according to claim 9, wherein the determining the location offset of the display device based on a location of the first reference point and a location of the second reference point of the display device comprises:
obtaining a picture display policy, wherein the picture display policy indicates a display location of the to-be-displayed image in the first reference region; and
determining the location offset based on the picture display policy, the location of the first reference point, and the location of the second reference point.

14. The method according to claim 9, wherein the determining the angle offset of the display device based on the first reference region and the second reference region of the display device comprises:
determining an included angle between a length direction of the first reference region and a length direction of the second reference region as the angle offset; or
determining an included angle between a width direction of the first reference region and a width direction of the second reference region as the angle offset.

15. The method according to any one of claims 9 to 14, wherein the first reference region is a minimum bounding rectangle or a maximum inscribed rectangle of the combined screen.

16. The method according to any one of claims 9 to 15, wherein the first reference region is a minimum bounding rectangle or a maximum inscribed rectangle of an effective region of the combined screen, and the effective region of the combined screen is a region obtained after a frame of each display device is removed from the combined screen.

17. The method according to any one of claims 9 to 16, wherein the second reference region of the display device is a minimum bounding rectangle or a maximum inscribed rectangle of the display device.

18. The method according to any one of claims 9 to 17, wherein the second reference region of the display device is a minimum bounding rectangle or a maximum inscribed rectangle of an effective region of the display device, and the effective region of the display device is a region obtained after the frame of the display device is removed.

19. The method according to any one of claims 8 to 18, wherein the first data comprises a target image, and the target image is an image obtained by photographing the combined screen when each display device in the combined screen displays a pure-color image.

20. A display device, comprising a processor, wherein the processor is configured to: be coupled to a memory, read instructions in the memory, and enable, based on the instructions, the display device to perform the method according to any one of claims 1 to 7.

21. A control device, comprising a processor, wherein the processor is configured to: be coupled to a memory, read instructions in the memory, and enable, based on the instructions, the control device to perform the method according to any one of claims 8 to 19.

22. A combined screen, comprising a plurality of display devices according to claim 20.

23. An image processing system, comprising the control device according to claim 21 and the combined screen according to claim 22.

24. A computer-readable storage medium, wherein the computer-readable storage medium stores computer instructions, and when the computer instructions are run on a device, the device is enabled to perform the method according to any one of claims 1 to 7, or perform the method according to any one of claims 8 to 19.

25. A computer program product comprising instructions, wherein when the computer program product runs on a device, the device is enabled to perform the method according to any one of claims 1 to 7, or perform the method according to any one of claims 8 to 19.

26. A chip system, wherein the chip system comprises a processor, the processor is coupled to a memory, and the processor executes a computer program stored in the memory, to implement the method according to any one of claims 1 to 7, or implement the method according to any one of claims 8 to 19.
